# EUROPEAN PATENT APPLICATION

(11) **EP 4 700 552 A1**
(43) Date of publication of application: **25.02.2026**
(21) Application number: 24829798.8
(22) Date of filing: 01.02.2024
(51) Int. Cl.: G06F 3/0482

(54) **DYNAMIC EFFECT CONFIGURATION METHOD AND ELECTRONIC DEVICE**

(30) Priority: 30.06.2023 CN 202310799528
(71) Applicant: Huawei Technologies Co., Ltd., Shenzhen, Guangdong 518129 (CN)
(72) Inventor: SHEN, Jiquan, Shenzhen, Guangdong 518129 (CN); ZHANG, Haoping, Shenzhen, Guangdong 518129 (CN); ZHANG, Chao, Shenzhen, Guangdong 518129 (CN); ZHANG, Jiao, Shenzhen, Guangdong 518129 (CN); CHEN, Feng, Shenzhen, Guangdong 518129 (CN)
(74) Representative: Gill Jennings & Every LLP
(86) International application number: PCT/CN2024/075182
(87) International publication number: WO 2025/001136

(57) **Abstract**

An animation configuration method and an electronic device are disclosed. The method includes: detecting a theme download request for a second electronic device, and displaying a first interface, where the first interface includes a theme list, and a running condition of a theme in the theme list matches device information of the second electronic device; detecting a selection operation for a first theme in the theme list, and obtaining a theme package of the first theme, where the theme package of the first theme includes first information, and the first information indicates an animation parameter value of an animation; and sending the theme package of the first theme to the second electronic device, for the second electronic device to update an animation parameter value of an animation in the second electronic device based on the first information. According to embodiments of this application, flexible setting of an animation on an electronic device by a user can be implemented, and user experience can be improved.

## Description

The invention claims priority to Chinese Patent Application No. 202310799528.9, filed with the China National Intellectual Property Administration on June 30, 2023 and entitled "ANIMATION CONFIGURATION METHOD AND ELECTRONIC DEVICE", which is incorporated herein by reference in its entirety.

### TECHNICAL FIELD

This application relates to the field of animation configuration technologies, and in particular, to an animation configuration method and an electronic device.

### BACKGROUND

For example, to improve user's use fun and user experience, an animation is provided on an electronic device like a smartwatch, to improve user's use fun. However, the animation on the electronic device is fixed, and a user cannot independently change the animation on the electronic device. As a result, user experience is reduced.

### SUMMARY

This application provides an animation configuration method and an electronic device, to implement flexible setting of an animation on an electronic device by a user, and improve user experience.

According to a first aspect, this application provides an animation configuration method, applied to a first electronic device. The method includes: detecting a theme download request for a second electronic device, and displaying a first interface, where the first interface includes a theme list, and a running condition of a theme in the theme list matches device information of the second electronic device; detecting a selection operation for the first theme in the theme list, and obtaining a theme package of a first theme, where the theme package of the first theme includes first information, and the first information indicates an animation parameter value of an animation; and sending the theme package of the first theme to the second electronic device, for the second electronic device to update an animation parameter value of an animation in the second electronic device based on the first information. The first electronic device may be, for example, a mobile phone, a PC, or a PAD. The second electronic device may be, for example, a mobile phone, a PC, a PAD, a wearable device, a smart television, or a smart doorbell. The first information may be, for example, animation configuration information in a theme package in a subsequent embodiment. In the method, the first electronic device provides the first interface including the theme list for a user. The user may select the first theme from the theme list. The first electronic device downloads the theme package of the first theme, and sends the theme package of the first theme to the second electronic device. The second electronic device updates the animation parameter value based on the theme package. In this way, the user can flexibly set an animation on the second electronic device by downloading theme packages of different themes, and user experience is improved.

In a possible implementation, the first interface further includes a user-defined theme. The method further includes: detecting a selection operation for the user-defined theme, and determining second information of the user-defined theme based on a user operation detected on a setting-related interface of the user-defined theme, where the second information indicates an animation parameter value of an animation, and the setting-related interface is used to support a user in setting the animation parameter value of the animation; determining a theme package of the user-defined theme based on the second information of the user-defined theme; and sending the theme package of the user-defined theme to the second electronic device, for the second electronic device to update the animation parameter value of the animation in the second electronic device based on the second information. In the method, the user may independently set the animation parameter value of the animation on the setting-related interface of the user-defined theme provided by the first electronic device. In view of this, the theme package of the user-defined theme is determined, and the theme package of the user-defined theme is sent to the second electronic device. The second electronic device updates the animation parameter value based on the theme package. In this way, the user can flexibly set the animation on the second electronic device, and user experience is improved.

In a possible implementation, determining the second information of the user-defined theme based on the user operation detected on the setting-related interface of the user-defined theme includes: displaying a second interface, where the second interface includes an animation type; detecting a selection operation for the animation type, and displaying a third interface, where the third interface includes an option of the animation type, the option indicates an animation parameter value of an animation, and animation parameter values that are of a same animation and that are indicated by different options are at least partially different; and detecting a selection operation for a first option of the animation type, and determining that the second information of the user-defined theme includes: the animation type is the first option. In this method, the user only needs to set an animation type to set an animation parameter value of each animation. This is easy to operate.

In a possible implementation, determining the second information of the user-defined theme based on the user operation detected on the setting-related interface of the user-defined theme includes: displaying a fourth interface, where the fourth interface includes a first animation list; detecting a selection operation for a first animation in the first animation list, and displaying a fifth interface, where the fifth interface includes an option of a first animation parameter of the first animation; and detecting a selection operation for a second option of the first animation parameter, and determining that the second information of the user-defined theme includes: the first animation parameter of the first animation is the second option. In the method, the user may independently set a parameter value of each animation parameter, and setting of an animation is more flexible and refined.

In a possible implementation, a running condition of an animation in the first animation list matches the device information of the second electronic device; and/or a running condition of the option matches the device information of the second electronic device. In the method, the running condition of the animation in the first animation list matches the device information of the second electronic device; and/or the running condition of the option matches the device information of the second electronic device, so that a software running capability of the second electronic device can support the animation and the option selected by the user, and a good running effect can be achieved when the second electronic device runs the animation.

In a possible implementation, the method further includes: detecting an animation setting request for the second electronic device, and determining animation setting information based on a user operation detected on an animation setting-related interface, where the animation setting information indicates an animation parameter value of an animation, and the animation setting-related interface is used to support the user in setting the animation parameter value of the animation; and sending the animation setting information to the second electronic device, for the second electronic device to update the animation parameter value of the animation in the second electronic device based on the animation setting information. In the method, the user may independently set the animation parameter value of the animation on the animation setting-related interface provided by the first electronic device. The first electronic device sends the corresponding animation setting information to the second electronic device, and the second electronic device updates the animation parameter value based on the animation setting information. In this way, the user flexibly sets the animation on the second electronic device, and user experience is improved.

In a possible implementation, determining the animation setting information based on the user operation detected on the animation setting-related interface includes: displaying a sixth interface, where the sixth interface includes an animation type; detecting a selection operation for the animation type, and displaying a seventh interface, where the seventh interface includes an option of the animation type, the option indicates an animation parameter value of an animation, and animation parameter values that are of an animation and that are indicated by different options are at least partially different; and detecting a selection operation for a third option of the animation type, and determining that the animation setting information includes: the animation type is the third option. In this method, the user only needs to set an animation type to set an animation parameter value of each animation. This is easy to operate.

In a possible implementation, a running condition of the option of the animation type matches the device information of the second electronic device.

In a possible implementation, the method further includes: displaying an eighth interface, where the eighth interface includes a second animation list; detecting a selection operation for a second animation in the second animation list, and displaying a ninth interface, where the ninth interface includes an option of a second animation parameter of the second animation; and detecting a selection operation for a fourth option of the second animation parameter, and determining that the animation setting information includes: the second animation parameter of the second animation is the fourth option. In the method, the user may independently set a parameter value of each animation parameter, and setting of an animation is more flexible and refined.

In a possible implementation, a running condition of an animation in the second animation list matches the device information of the second electronic device; and/or a running condition of the option matches the device information of the second electronic device.

In a possible implementation, displaying the first interface includes: sending a first request message to a server, where the first request message is used to request a theme corresponding to the second electronic device; receiving a theme list sent by the server in response to the first request message, where the theme list is generated based on a successfully matched theme obtained by the server by sequentially matching the device information of the second electronic device with a running condition of each theme; and displaying the first interface based on the theme list.

In a possible implementation, the first request message includes the device information of the second electronic device, and the device information of the second electronic device is obtained by the first electronic device from the second electronic device.

In a possible implementation, the device information of the second electronic device includes a device type, a device model, a quantity of CPU cores, and/or a CPU frequency.

According to a second aspect, an embodiment of this application provides an animation configuration method, applied to a second electronic device. The method includes: receiving a theme package of a first theme sent by a first electronic device, where the first electronic device is configured to perform the animation configuration method according to any implementation of the first aspect, the theme package of the first theme includes first information, and the first information indicates an animation parameter value of an animation; and updating an animation parameter value of an animation based on the first information. In the method, the first electronic device provides a first interface including a theme list for a user. The user may select the first theme from the theme list. The first electronic device downloads the theme package of the first theme, and sends the theme package of the first theme to the second electronic device. The second electronic device updates the animation parameter value based on the theme package. In this way, the user can flexibly set an animation on the second electronic device by downloading theme packages of different themes, and user experience is improved.

In a possible implementation, updating the animation parameter value of the animation based on the first information includes: obtaining an application that allows animation user-defining in the second electronic device, and sending the first information to the application, for the application to update an animation parameter value of an animation in the application based on the first information.

In a possible implementation, the method further includes: detecting an animation setting request, and determining animation setting information based on a user operation detected on an animation setting-related interface, where the animation setting information indicates an animation parameter value of an animation, and the animation setting-related interface is used to support the user in setting the animation parameter of the animation; and updating the animation parameter value of the animation based on the animation setting information. In the method, the user may independently set the animation parameter value of the animation on the animation setting-related interface provided by the second electronic device. In view of this, the second electronic device updates the animation parameter value. In this way, the user flexibly sets the animation on the second electronic device, and user experience is improved.

In a possible implementation, determining the animation setting information based on the user operation detected on the animation setting-related interface includes: displaying a tenth interface, where the tenth interface includes an animation type; detecting a selection operation for the animation type, and displaying an eleventh interface, where the eleventh interface includes an option of the animation type, the option indicates an animation parameter value of an animation, and animation parameter values that are of an animation and that are indicated by different options are at least partially different; and detecting a selection operation for a first option of the animation type, and determining that the animation setting information includes: the animation type is the first option. In this method, the user only needs to set an animation type to set an animation parameter value of each animation. This is easy to operate.

In a possible implementation, the method further includes: displaying a twelfth interface, where the twelfth interface includes a third animation list; detecting a selection operation for a third animation in the third animation list, and displaying a thirteenth interface, where the thirteenth interface includes an option of a third animation parameter of the third animation; and detecting a selection operation for a fifth option of the third animation parameter, and determining that the animation setting information includes: the third animation parameter is the fifth option. In the method, the user may independently set a parameter value of each animation parameter, and setting of an animation is more flexible and refined.

According to a third aspect, an embodiment of this application provides a first electronic device, including a processor and a memory. One or more computer programs are stored in the memory, the one or more computer programs include instructions, and when the instructions are executed by the processor, the first electronic device is enabled to perform the method according to any implementation of the first aspect.

According to a fourth aspect, an embodiment of this application provides a second electronic device, including a processor and a memory. One or more computer programs are stored in the memory, the one or more computer programs include instructions, and when the instructions are executed by the processor, the second electronic device is enabled to perform the method according to any implementation of the second aspect.

According to a fifth aspect, an embodiment of this application provides an animation configuration system, including the first electronic device according to the third aspect and the second electronic device according to the fourth aspect.

In a possible implementation, the system further includes a server, configured to send, to the first electronic device, the theme list that is generated based on a successfully matched theme obtained by sequentially matching device information of the second electronic device with a running condition of each theme.

According to a sixth aspect, an embodiment of this application provides a computer-readable storage medium. The computer-readable storage medium stores a computer program. When the computer program is run on a computer, the computer is enabled to perform the method according to any implementation of the first aspect or the second aspect.

According to a seventh aspect, an embodiment of this application provides a computer program. When the computer program is executed by a computer, the computer is configured to perform the method according to the first aspect.

In a possible design, all or some of programs in the seventh aspect may be stored in a storage medium that is encapsulated with a processor, or some or all of programs may be stored in a memory that is not encapsulated with a processor.

### BRIEF DESCRIPTION OF DRAWINGS

To describe the technical solutions in embodiments of this application more clearly, the following briefly describes the accompanying drawings used in embodiments. It is clear that, the accompanying drawings in the following descriptions show merely some embodiments of this application, and a person of ordinary skill in the art may derive other drawings from these accompanying drawings without creative efforts.
FIG. 1A and FIG. 1B are diagrams of implementation structures of a system architecture according to an embodiment of this application;
FIG. 2A is a diagram of a structure of an electronic device according to an embodiment of this application;
FIG. 2B is a diagram of a structure of a first electronic device according to an embodiment of this application;
FIG. 2C is a diagram of a structure of a second electronic device according to an embodiment of this application;
FIG. 3A-1 to FIG. 3A-3 are diagrams of an interface of a sliding spring animation according to an embodiment of this application;
FIG. 3B-1 and FIG. 3B-2 are diagrams of interface effect comparison of sliding spring animations with different stiffness parameter values according to an embodiment of this application;

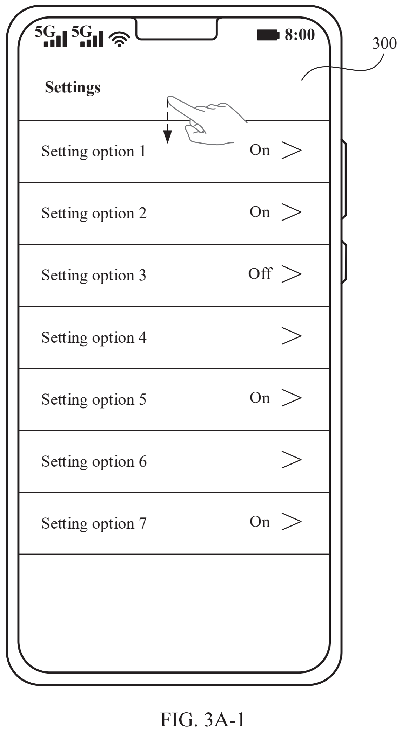

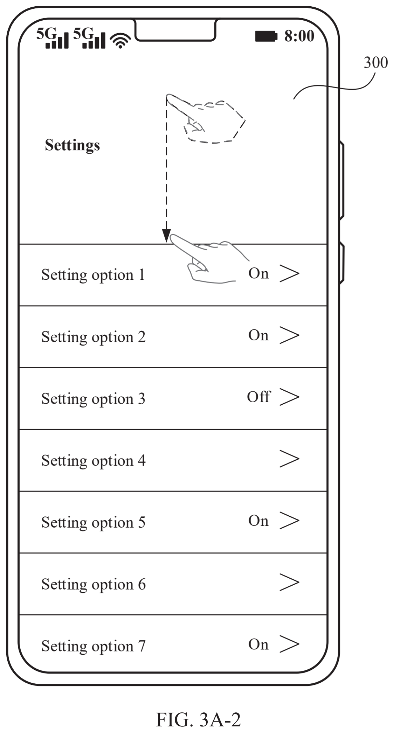

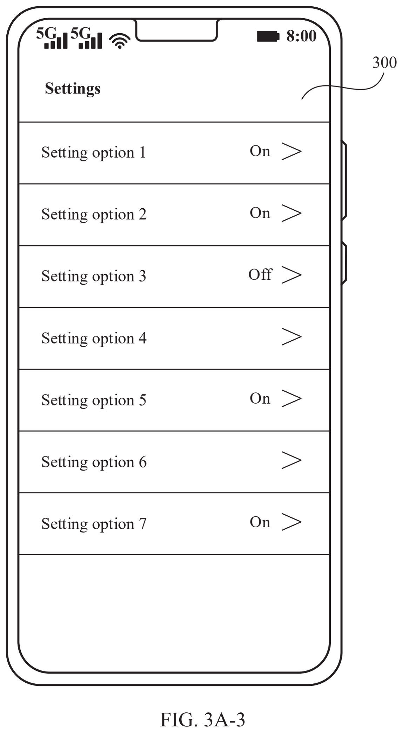

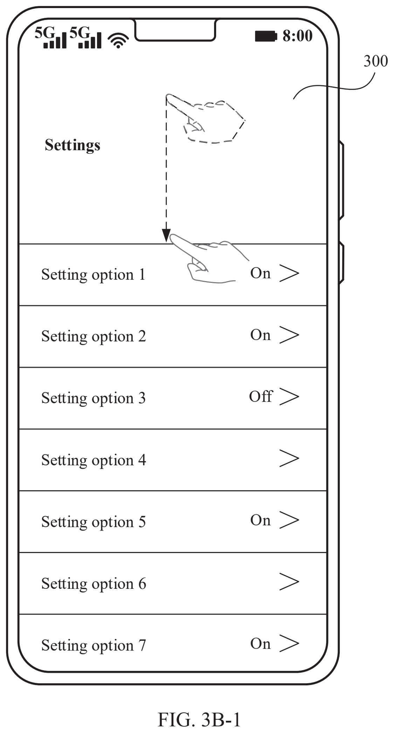

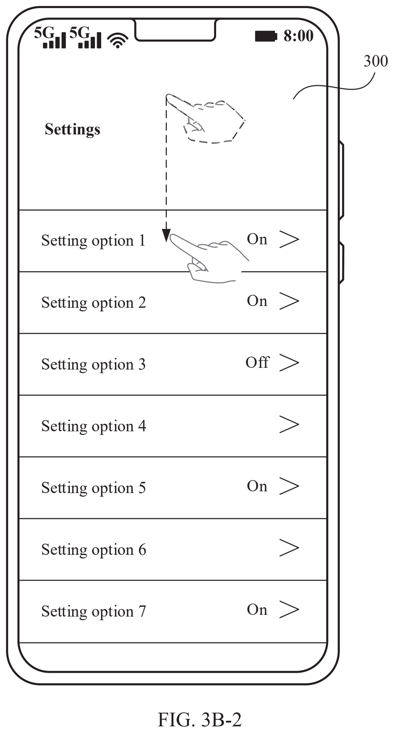

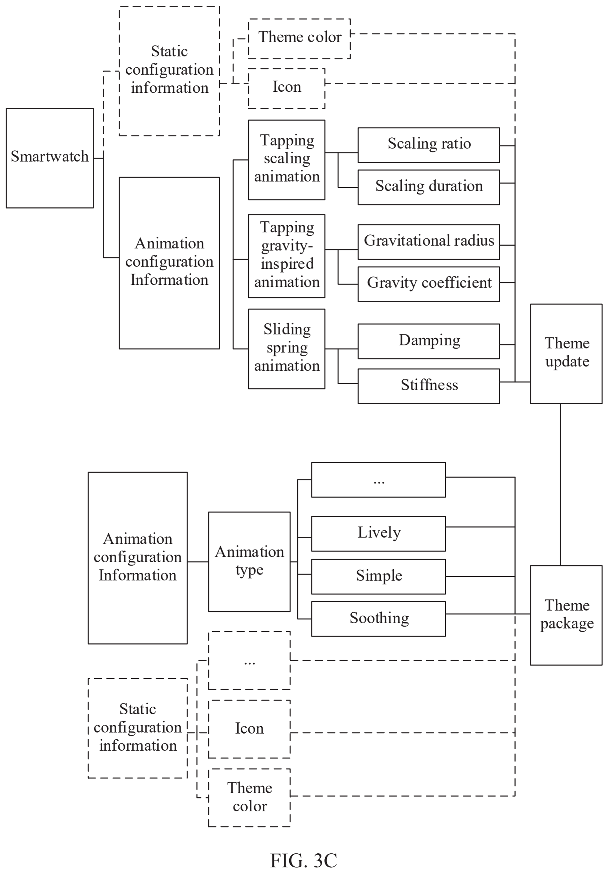

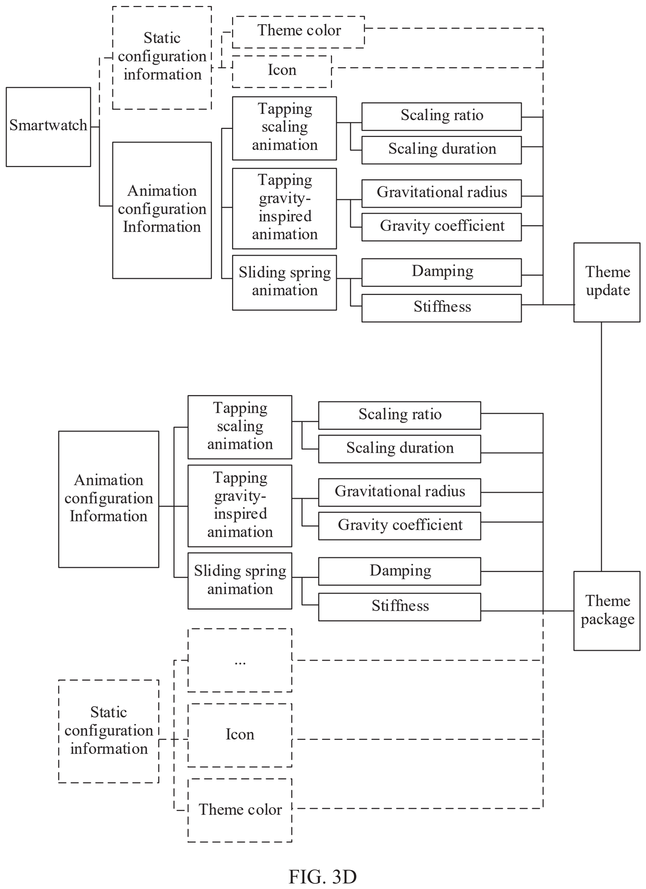

FIG. 3C and FIG. 3D are diagrams of a theme package structure and a theme update principle according to an embodiment of this application;

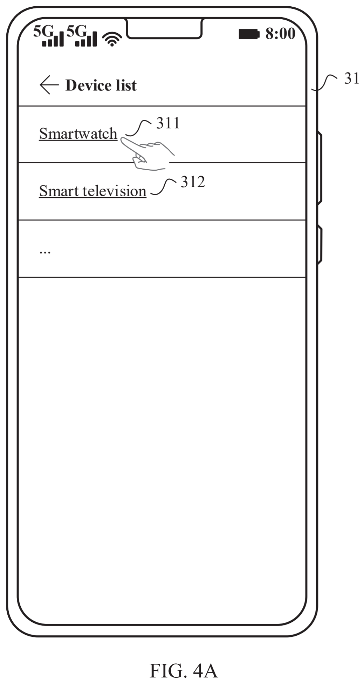

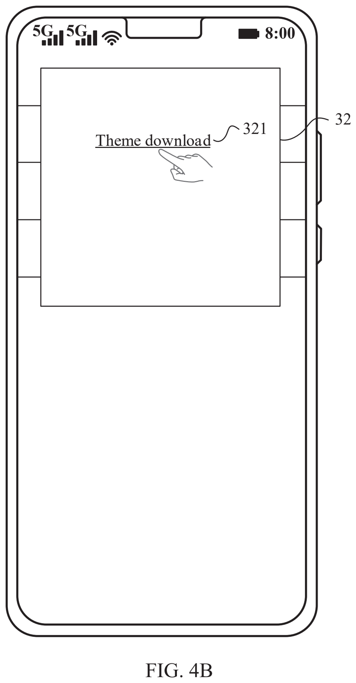

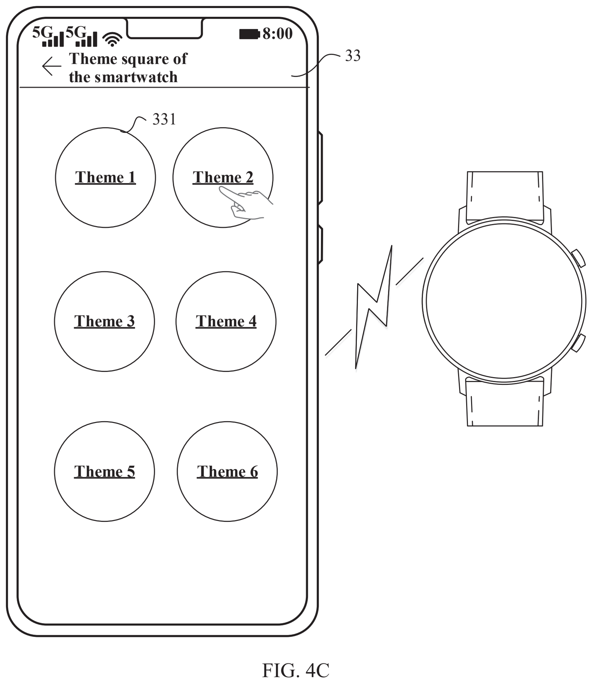

FIG. 4A to FIG. 4C are diagrams of an interface of an animation configuration method according to an embodiment of this application;

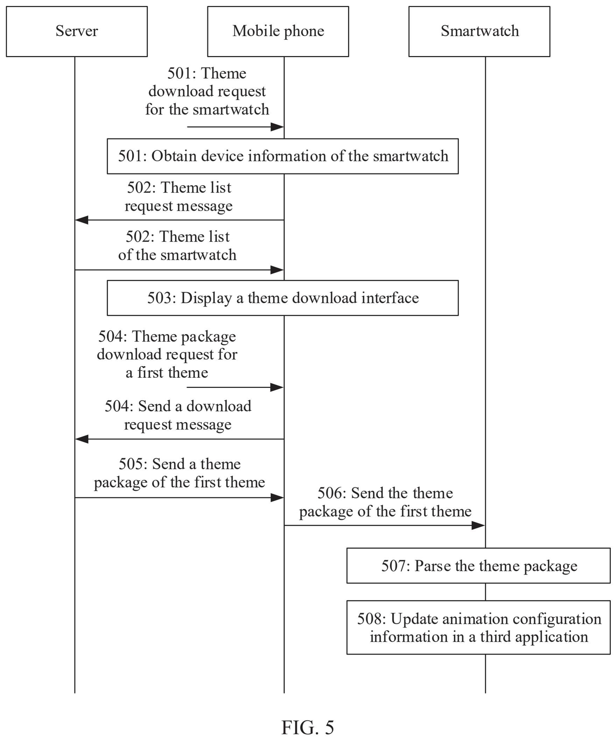

FIG. 5 is a first schematic flowchart of an animation configuration method according to an embodiment of this application;

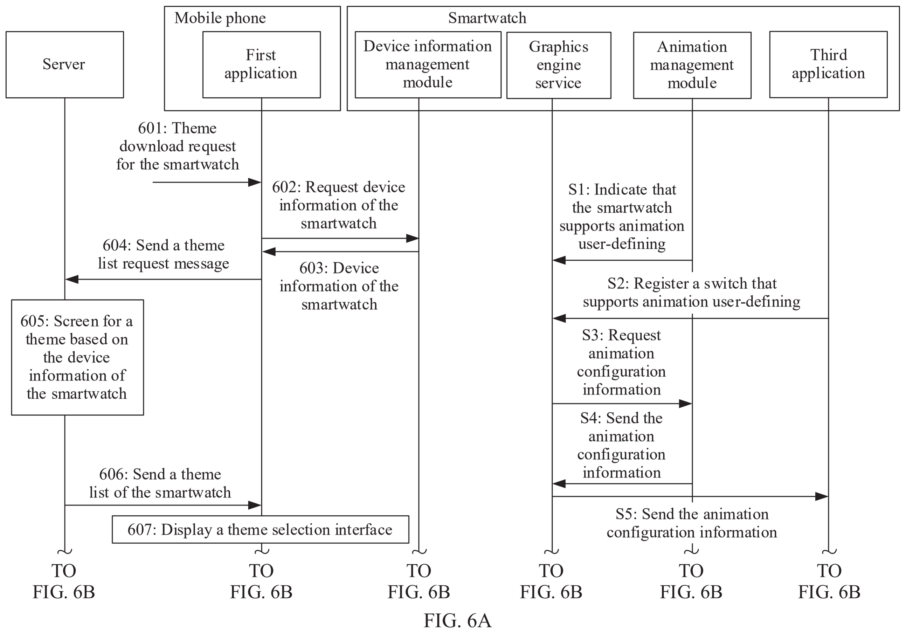

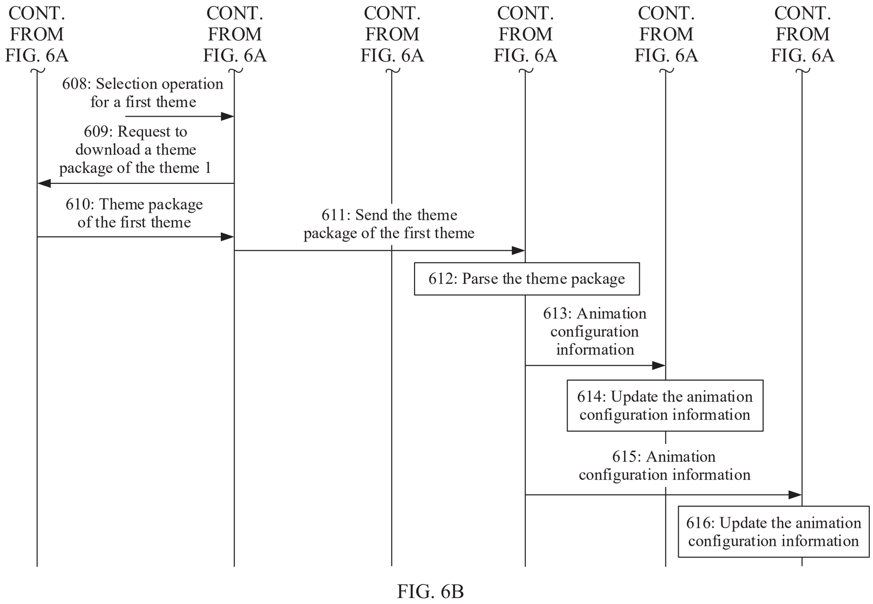

FIG. 6A and FIG. 6B are a second schematic flowchart of an animation configuration method according to an embodiment of this application;

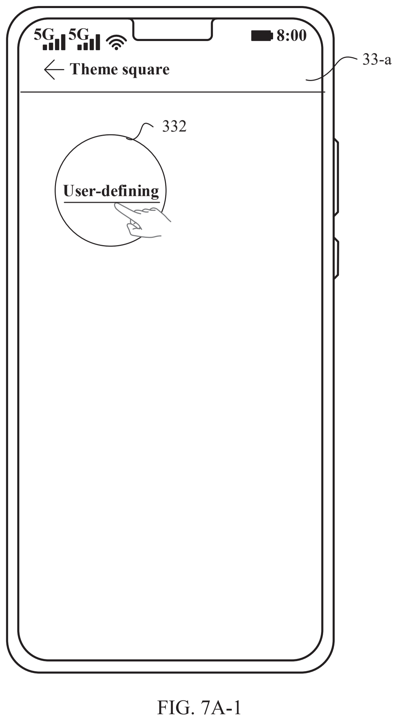

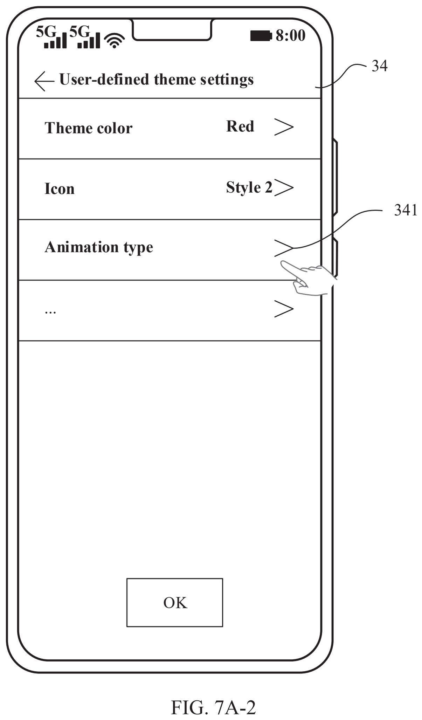

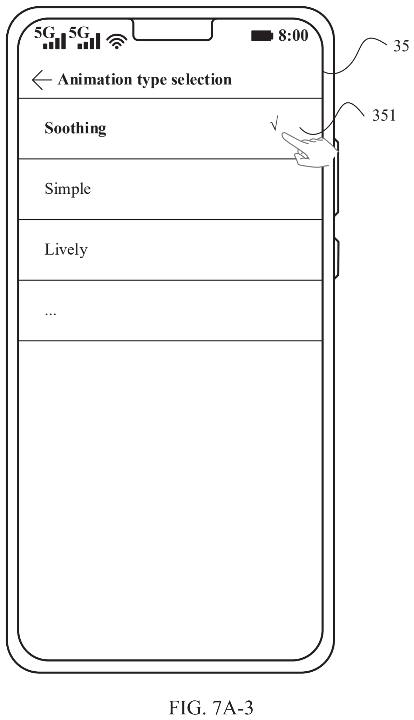

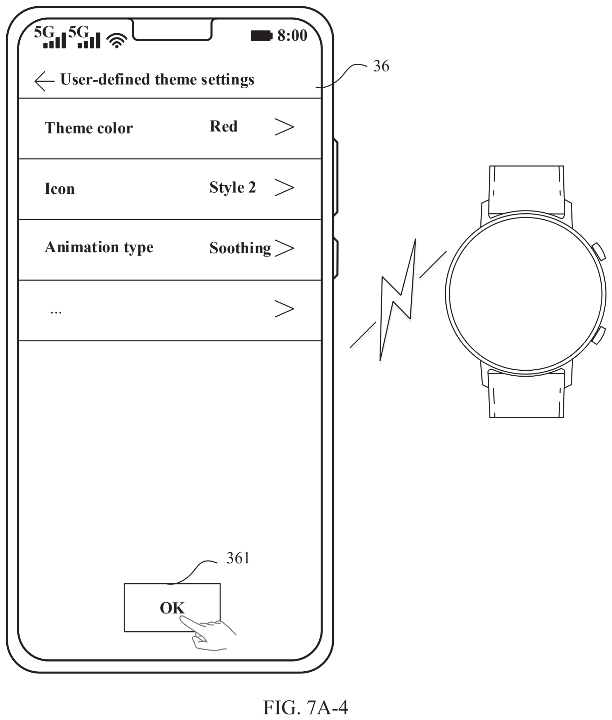

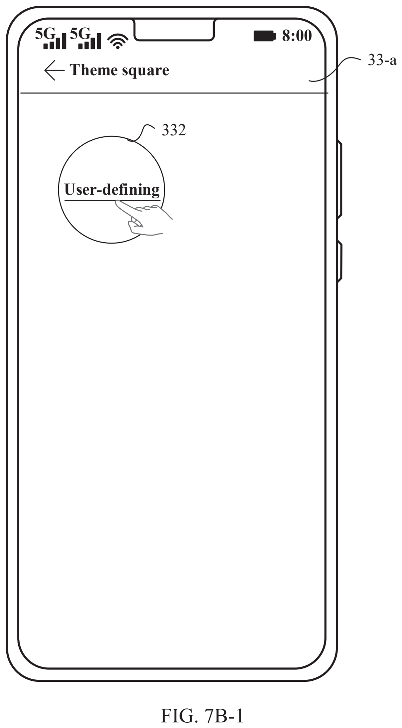

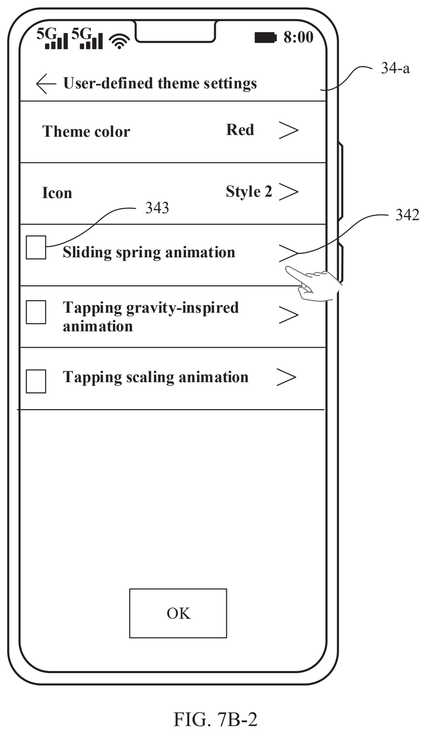

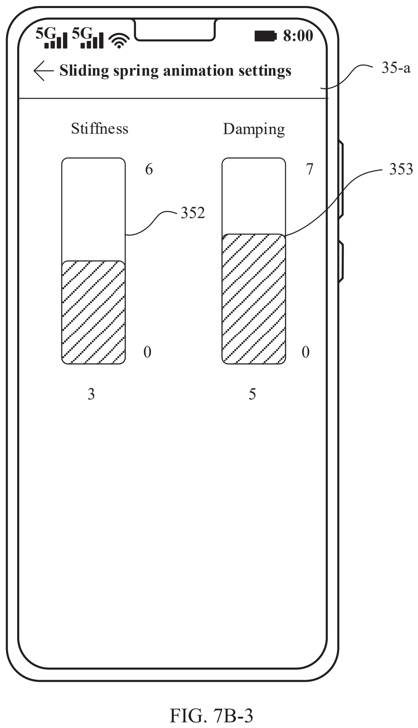

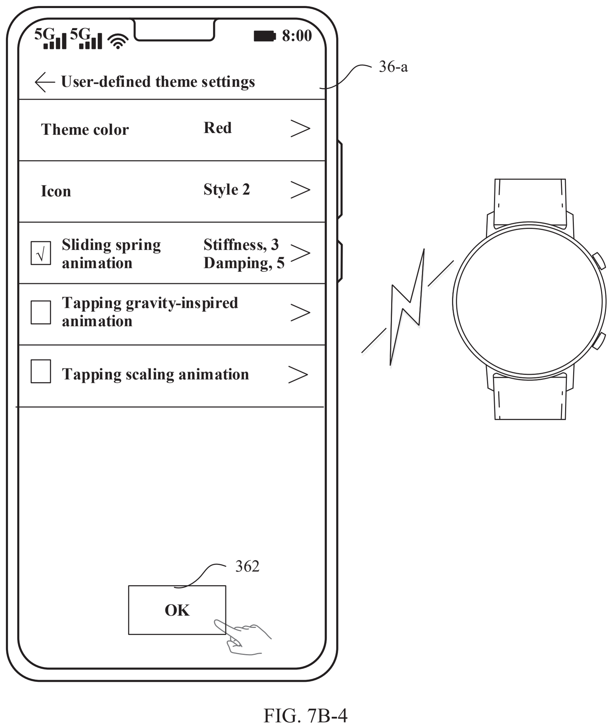

FIG. 7A-1 to FIG. 7A-4 and FIG. 7B-1 to FIG. 7B-4 are diagrams of interfaces of an animation configuration method according to an embodiment of this application;

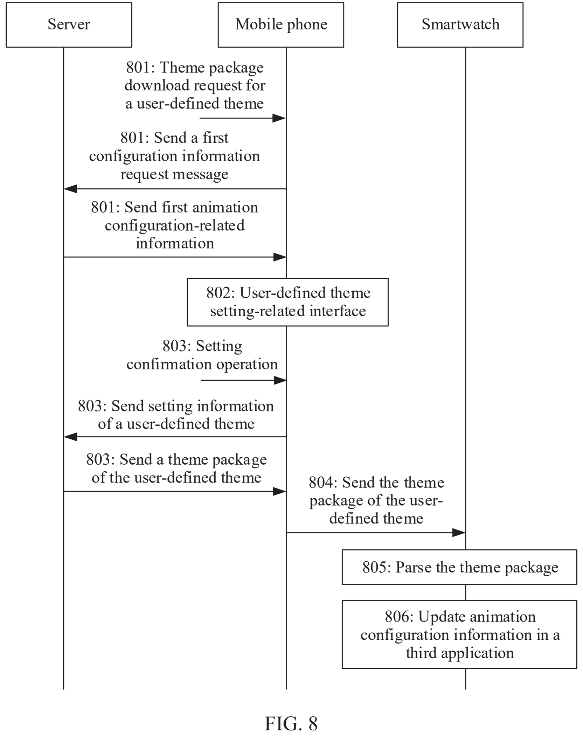

FIG. 8 is a third schematic flowchart of an animation configuration method according to an embodiment of this application;

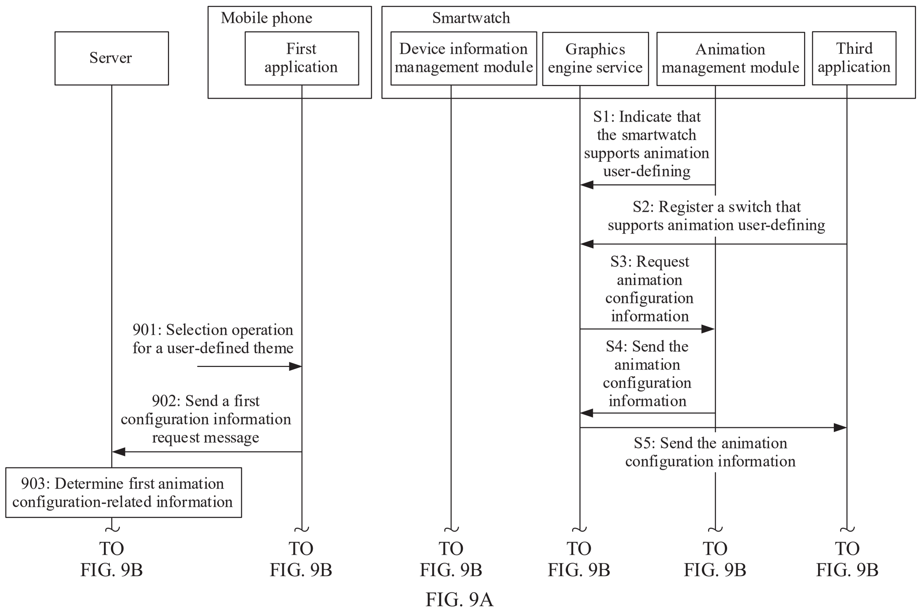

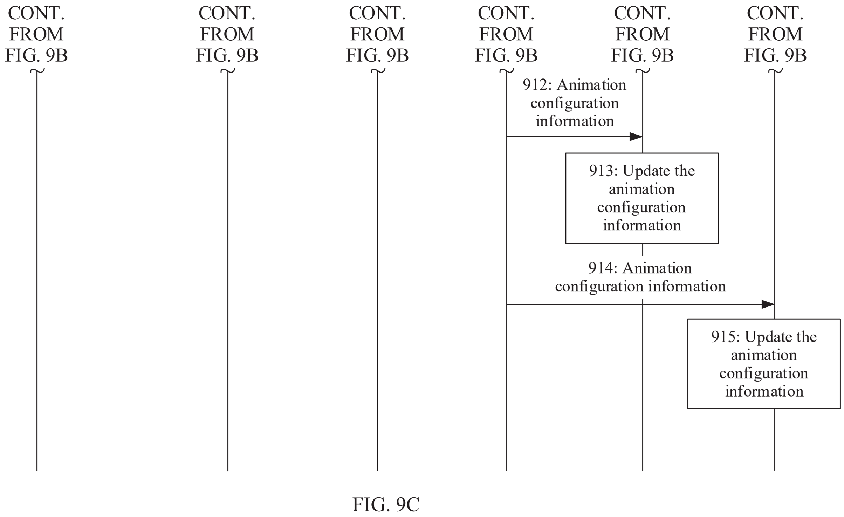

FIG. 9A to FIG. 9C are a fourth schematic flowchart of an animation configuration method according to an embodiment of this application;
FIG. 10A-1 to FIG. 10A-3 and FIG. 10B-1 to FIG. 10B-3 are diagrams of interfaces of an animation configuration method according to an embodiment of this application;

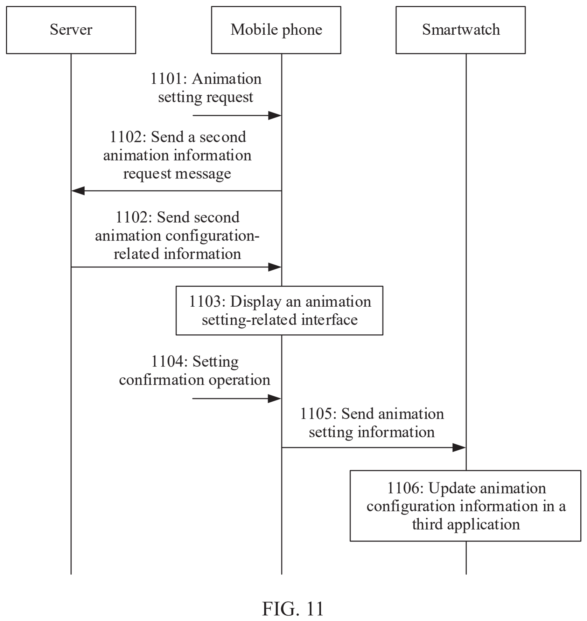

FIG. 11 is a fifth schematic flowchart of an animation configuration method according to an embodiment of this application;

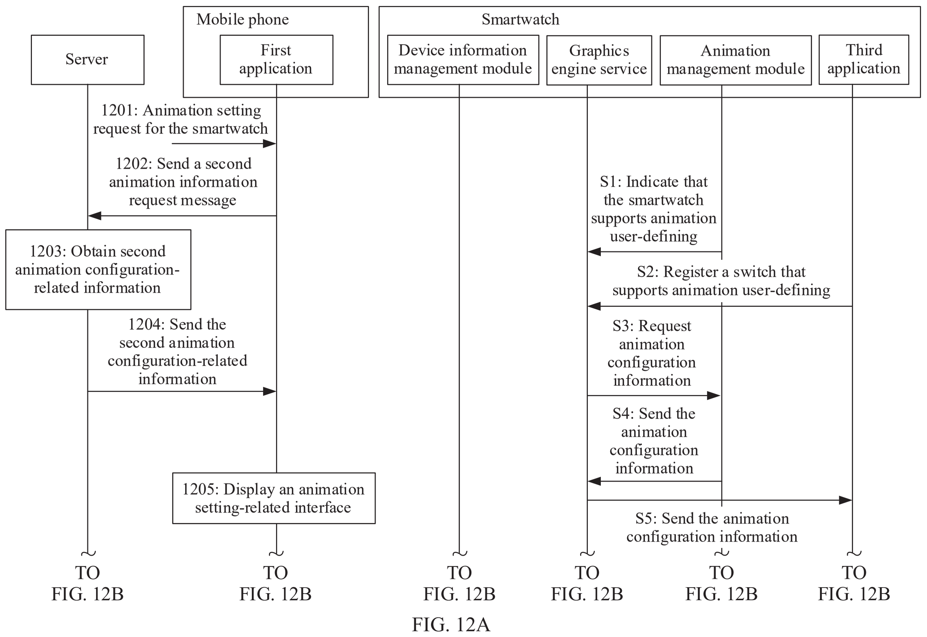

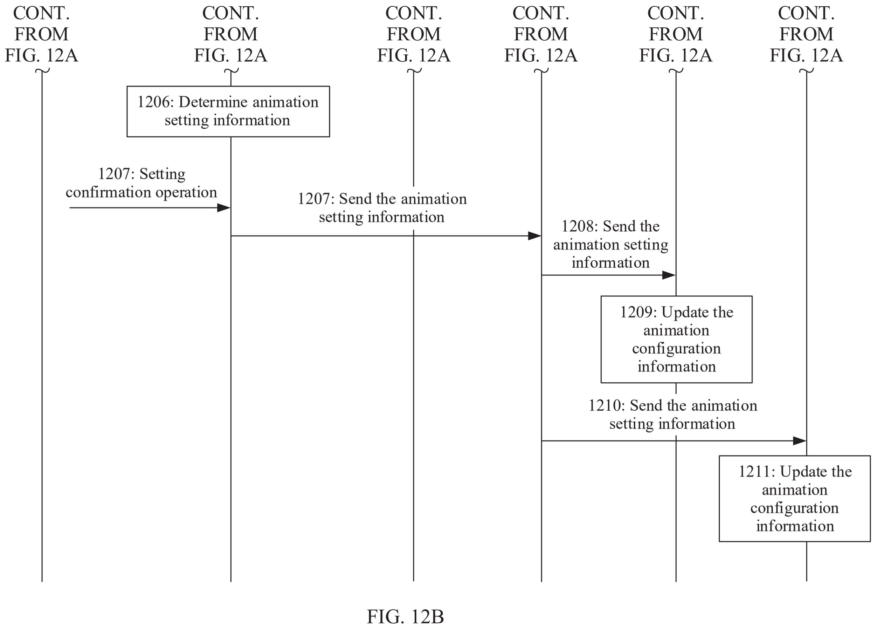

FIG. 12A and FIG. 12B are a sixth schematic flowchart of an animation configuration method according to an embodiment of this application;

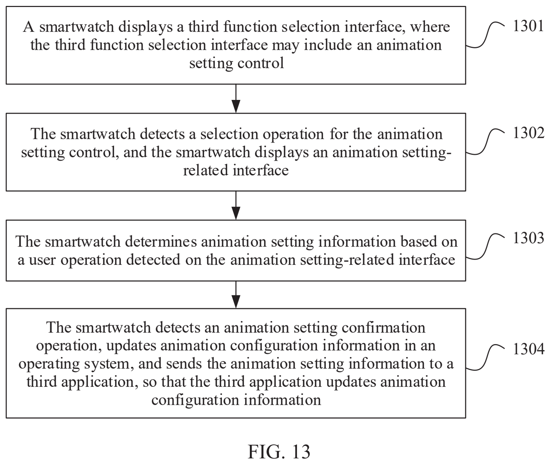

FIG. 13 is a seventh schematic flowchart of an animation configuration method according to an embodiment of this application; and

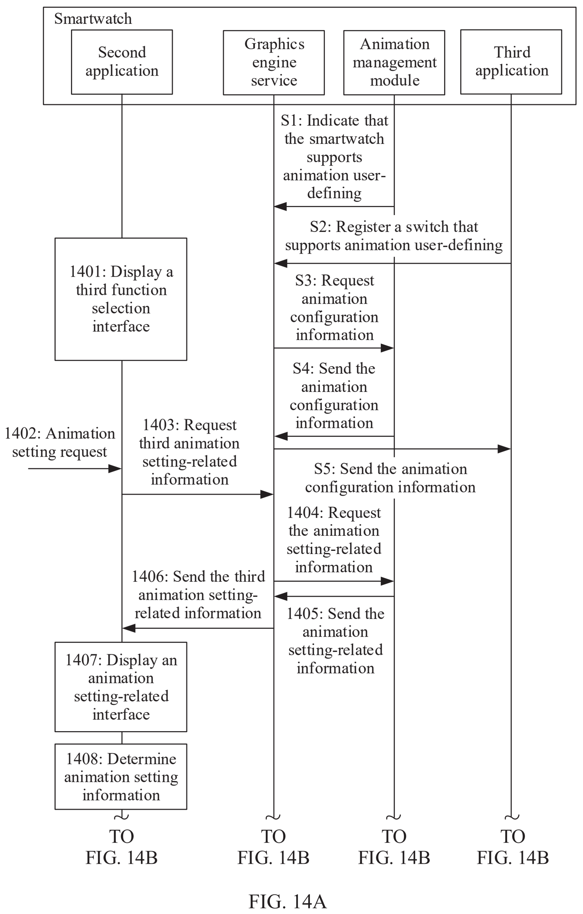

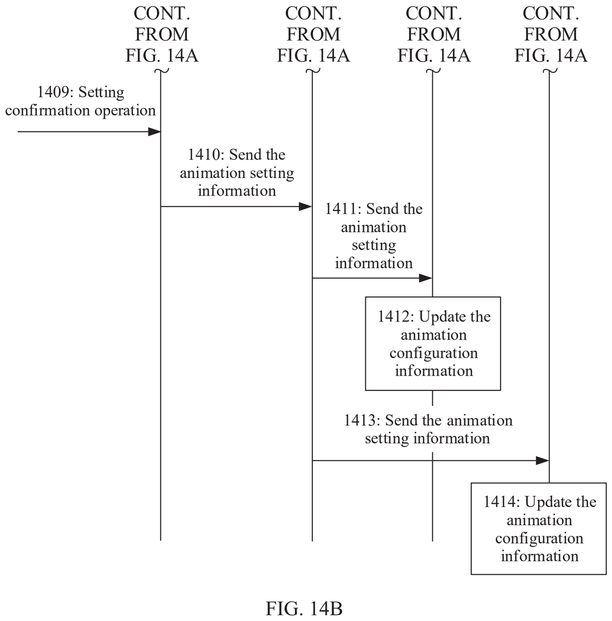

FIG. 14A and FIG. 14B are an eighth schematic flowchart of an animation configuration method according to an embodiment of this application.

### DESCRIPTION OF EMBODIMENTS

Terms used in embodiments of this application are only used to explain specific embodiments of this application, but are not intended to limit this application.

In embodiments of this application, attributes related to a user interface may include a dynamic attribute and a static attribute. The dynamic attribute is a user interface attribute related to a dynamic effect. The dynamic effect may include an animation picture, a sound, vibration, and/or the like. For example, the dynamic effect may be displayed in a process of switching from one user interface to another user interface. The dynamic attribute may also be referred to as an animation. The static attribute is a user interface attribute that does not involve a dynamic effect, for example, an icon and a theme color.

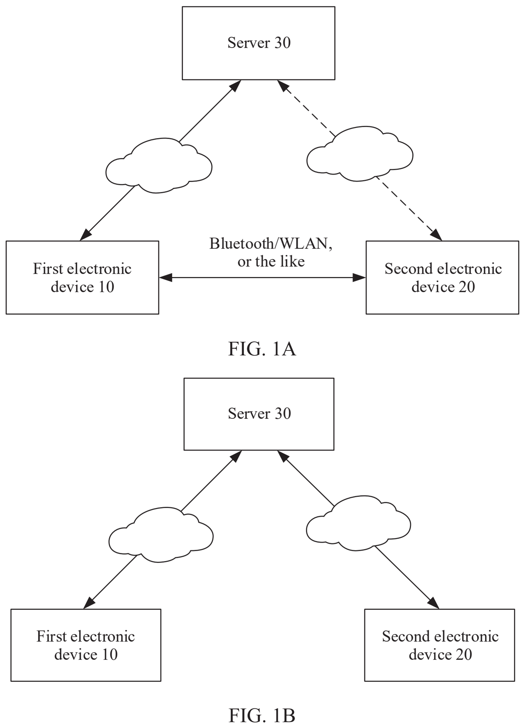

An animation configuration method in embodiments of this application is applicable to, for example, system architectures shown in FIG. 1A and FIG. 1B. As shown in FIG. 1A and FIG. 1B, a first electronic device 10, a second electronic device 20, and a server 30 are included.

Refer to FIG. 1A. The first electronic device 10 may be directly connected to the second electronic device 20 in a communication manner like Bluetooth, wireless fidelity (wireless fidelity, WiFi), or ultra wide band (ultra wide band, UWB), and the first electronic device 10 may be connected to the server 30 through a network. Optionally, the second electronic device 20 may alternatively be connected to the server 30 through a network.

Refer to FIG. 1B. The first electronic device 10 may be connected to the server 30 through a network, the second electronic device 20 may be connected to the server 30 through a network, and the second electronic device 20 may be indirectly connected to the first electronic device 10 through another device like the server 30. Specifically, the first electronic device 10 and the second electronic device 20 may establish an indirect connection through the server 30 in a manner of logging in to the server by using a same account.

The foregoing system architecture is merely an example. In the animation configuration method in embodiments of this application, a used communication manner is not limited in embodiments of this application, provided that the first electronic device 10 can communicate with the second electronic device 20 and the first electronic device 10 can communicate with the server 30.

The first electronic device 10 in embodiments of this application may be, for example, a device like a mobile phone, a personal computer (PC), or a tablet computer (PAD).

The second electronic device 20 in embodiments of this application is an electronic device that can support an animation, for example, a mobile phone, a PC, a PAD, a wearable device like a smartwatch or smart glasses, a smart television, or a smart doorbell. The smart doorbell may also be referred to as an electronic doorbell.

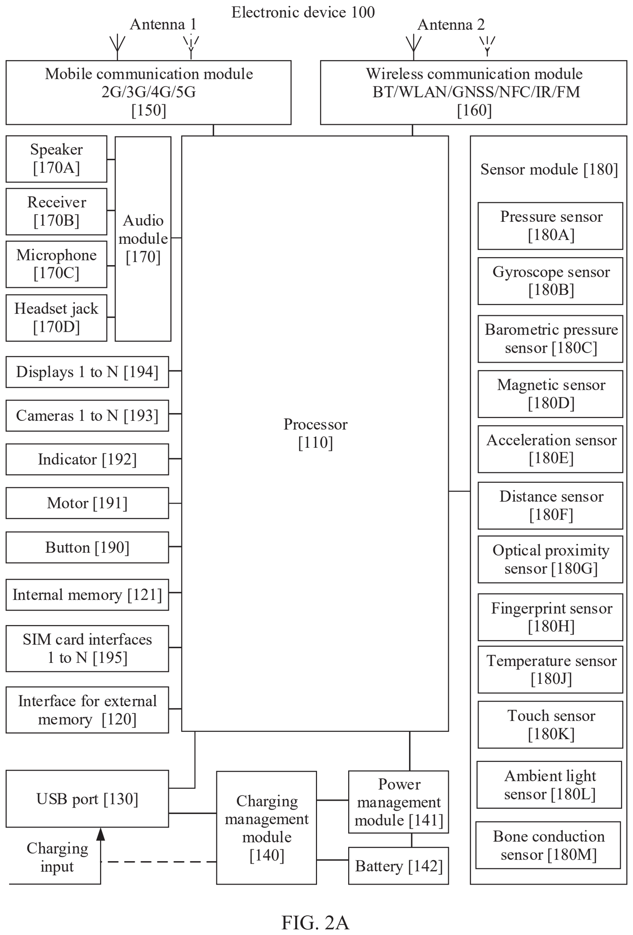

FIG. 2A is a diagram of a structure of an electronic device 100. The foregoing first electronic device or second electronic device may be implemented through a structure shown in FIG. 2A.

The electronic device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) port, and/or the like.

The I2C interface is a two-way synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used to perform asynchronous communication. The bus may be a two-way communication bus. The bus converts data to be transmitted between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to the charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be used to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of a mobile phone and a smartwatch may use a layered architecture, an event-driven architecture, a microkernel architecture, a micro service architecture, or a cloud architecture. In embodiments of this application, an Android system with a layered architecture is used as an example to describe software structures of the mobile phone and the smartwatch.

In a layered architecture, software is divided into several layers, and each layer has a clear role and task. The layers communicate with each other through a software interface. In embodiments of this application, an Android (Android) system is used as an example to describe a software structure of a first electronic device with the Android system. In some embodiments, the Android system is divided into five layers: an application layer, an application framework layer (also referred to as a system framework layer), a system library and Android runtime layer, a hardware abstraction layer (hardware abstraction layer, HAL), and a kernel layer from top to bottom.

The application layer may include several applications (referred to as apps for short below), for example, Camera, Gallery, Calendar, and WLAN.

The application framework layer provides an application programming interface (Application Programming Interface, API) and a programming framework for an application at the application layer, and includes various components and services to support Android development by a developer. The application framework layer further includes some predefined functions. For example, the application framework layer may include a window manager, a content provider, a resource manager, a camera service, and the like.

The system library and Android runtime layer includes a system library and Android runtime (Android Runtime). The system library may include a plurality of functional modules, for example, a surface manager, a two-dimensional graphics engine, a three-dimensional graphics processing library (for example, OpenGL ES), a media library, a font library, and the like. A browser kernel is used for interpreting a web page syntax (for example, an application HTML under a standard generalized markup language and JavaScript) and rendering (displaying) a web page. The two-dimensional graphics engine is configured to implement two-dimensional graphics drawing, image rendering, synthesis, layer processing, and the like. The three-dimensional graphics processing library is configured to implement three-dimensional graphics drawing, image rendering, synthesis, layer processing, and the like. The media library is configured to implement input of different streaming media. The font library is configured to implement input of different fonts. The Android runtime is used for scheduling and managing the Android system, and specifically includes a core library and a virtual machine. The core library includes two parts, one part is a function that needs to be invoked in a Java language, and the other part is a core library of Android. The virtual machine is configured to run an Android application developed in the Java language.

The HAL layer is an interface layer located between an operating system kernel and a hardware circuit.

The kernel layer is a layer between hardware and software.

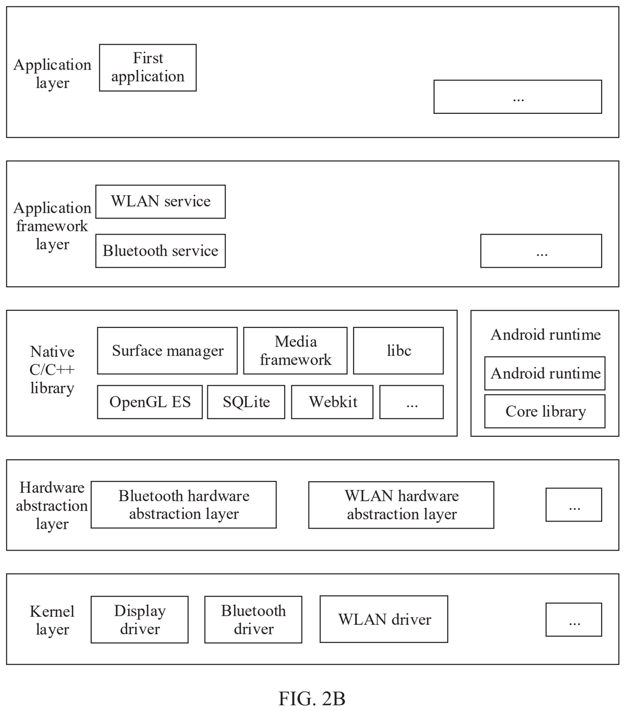

FIG. 2B is a block diagram of a software structure of the first electronic device according to an embodiment of this application.

An application layer may include a first application.

An application framework layer may include a Bluetooth service, a WLAN service, and the like.

A HAL layer may include a Bluetooth hardware abstraction layer (Bluetooth HAL) and a WLAN hardware abstraction layer (WLAN HAL). The Bluetooth hardware abstraction layer is configured to process Bluetooth data, and the WLAN hardware abstraction layer is configured to process WLAN data.

A kernel layer may include a display driver, a Bluetooth driver, a WLAN driver, and the like.

When the first electronic device directly communicates with the second electronic device through Bluetooth, a first application in the first electronic device may invoke the Bluetooth service at the framework layer, and then communicate with the second electronic device by using the Bluetooth hardware abstraction layer and the Bluetooth driver. A specific implementation is not described in embodiments of this application.

When the first electronic device communicates with a server through a network, the first application in the first electronic device may invoke the WLAN service at the framework layer, and then communicate with the server through the WLAN hardware abstraction layer and the WLAN driver. A specific implementation is not described in embodiments of this application.

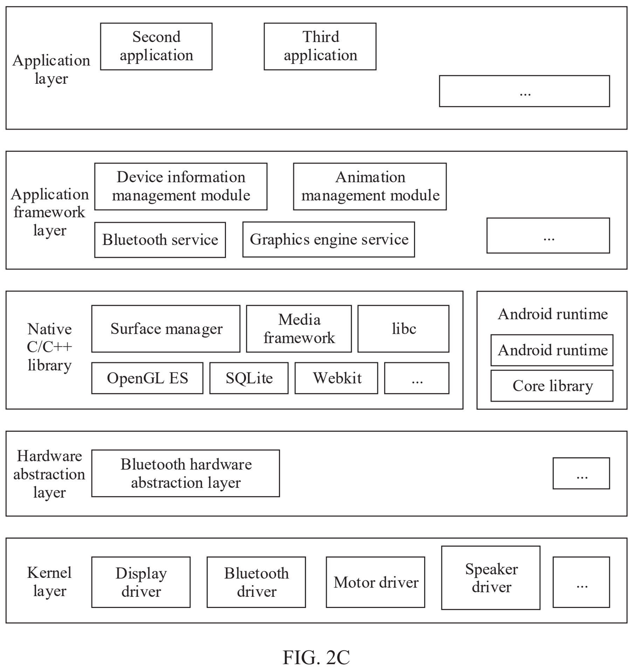

FIG. 2C is a block diagram of a software structure of the second electronic device according to an embodiment of this application.

An application layer may include a second application and/or a third application.

An application framework layer may include an animation management module, a device information management module, a graphics engine service, a Bluetooth service, and the like.

The animation management module is configured to manage whether the second electronic device supports a user-defined animation, manage animation configuration information of the second electronic device, for example, animations supported by the second electronic device and a parameter value of an animation parameter of each animation, and support a user in viewing and modifying the animation configuration information of the second electronic device through the second application.

The device information management module is configured to manage device information of the second electronic device. Optionally, the device information of the second electronic device may include but is not limited to a device type (for example, a watch or a television), a model, a quantity of cores of a central processing unit (central processing unit, CPU), a CPU frequency, and the like. The quantity of cores of the CPU indicates a quantity of kernels of the CPU, and indicates a quantity of cores included in one CPU.

A HAL layer may include a Bluetooth hardware abstraction layer (Bluetooth HAL).

A kernel layer may include a display driver, a Bluetooth driver, a motor driver, a speaker driver, and the like.

When the first electronic device and the second electronic device can directly communicate with each other through Bluetooth, the animation management module, the graphics engine service, and the like may invoke the Bluetooth service at the framework layer, and then communicate with the first electronic device through Bluetooth by using the Bluetooth hardware abstraction layer and the Bluetooth driver. A specific implementation is not described in embodiments of this application.

In the following embodiments, the animation configuration method in embodiments of this application is described in detail with reference to the structure of the first electronic device and the structure of the second electronic device.

In the following embodiments of this application, an example in which the first electronic device is a mobile phone, the second electronic device is a smartwatch, the mobile phone is directly connected to the smartwatch through Bluetooth, and the mobile phone is connected to a server through a network is used to describe an implementation of the animation configuration method in embodiments of this application.

It may be understood that the mobile phone in the following embodiments of this application may be replaced with another electronic device, and the smartwatch may also be replaced with another electronic device that supports an animation.

In an embodiment provided in this application, a user may download a theme package for the smartwatch in a first application of the mobile phone. The mobile phone sends the theme package to the smartwatch, and the smartwatch updates a theme based on the theme package. The theme package may include animation configuration information. Theme packages of different themes may include different animation configuration information. Therefore, the user may complete independent setting of an animation in the smartwatch by downloading a theme package for the smartwatch and updating a theme of the smartwatch. The first application is configured to provide a theme package download function for the smartwatch, an animation parameter setting function for the smartwatch, and the like for the user. It may be understood that the first application may further provide another function for the user. This is not limited in embodiments of this application. Optionally, the first application may be an application provided by a manufacturer of the smartwatch and used to manage the smartwatch. For example, the first application may be a Health application in the mobile phone.

Configuration information related to an animation in the smartwatch may be referred to as animation configuration information. The animation configuration information may include animations and a parameter value of an animation parameter of each animation. In the following embodiments, the parameter value of the animation parameter is referred to as an animation parameter value for short. For example, the animation may include a sliding spring animation, a tapping gravity-inspired animation, a tapping scaling animation, and the like. An animation parameter of the sliding spring animation may include stiffness, damping, and the like. An animation parameter of the tapping gravity-inspired animation may include a gravity coefficient, a gravity radius, and the like. An animation parameter of the tapping scaling animation may include scaling duration, a scaling ratio, and the like. Parameter values of the animation parameters is set, so that a same animation may generate different animation effects. For example, FIG. 3A-1 to FIG. 3A-3 are diagrams of a dynamic change of the sliding spring animation. When the user performs a downward sliding gesture on an interface shown in FIG. 3A-1 to FIG. 3A-3, a stretching animation resembling a spring is displayed in an upper area 300 of the interface, that is, a length of the upper area 300 of the interface gradually increases. When the user stops the sliding gesture and a finger leaves a screen, a retracting animation resembling a spring is displayed in the upper area 300 of the interface, that is, the length of the upper area 300 of the interface gradually decreases to an original length. The stiffness of the sliding spring animation may be used to control a length by which the upper area 300 of the interface is stretched at a same sliding length of the sliding gesture. Specifically, a larger parameter value of the stiffness indicates a smaller length by which the upper area 300 of the interface is stretched at a same sliding length of the sliding gesture of the user on the screen. For example, in a comparison diagram shown in FIG. 3B-1 and FIG. 3B-2, a parameter value of stiffness of a sliding spring animation on the left side is small, and a parameter value of stiffness of a sliding spring animation on the right side is large. The damping of the sliding spring animation may be used to control a speed at which the upper area 300 of the interface is retracted to the original length when the user stops the sliding gesture and the finger leaves the screen. Specifically, larger damping indicates a higher speed at which the upper area 300 of the interface is retracted to the original length.

Configuration information related to a static attribute in the smartwatch may be referred to as static configuration information. The static configuration information may include the static attribute and a parameter value of a static attribute parameter. The static attribute may include an icon, a theme color, and the like. A parameter of the icon may include a style, a size, and the like of the icon. A parameter of the theme color may include a tone, saturation, brightness, and the like.

In an embodiment, the animation configuration information in the theme package may include an animation type.

In embodiments of this application, different effects of one animation may be classified based on a user feeling or another standard, to obtain the foregoing animation type. Therefore, for a same animation parameter of a same animation, different animation types may correspond to different parameter values. Therefore, the animation parameter value of each animation may be indicated by using an animation type. For example, refer to FIG. 3C. The animation type may include soothing, simple, lively, and the like. For each animation parameter of each animation, each animation type corresponds to one parameter value of the animation parameter. For example, the parameter of the sliding spring animation includes the stiffness and the damping. Soothing may correspond to a parameter value 2 of the stiffness parameter and a parameter value 2 of the damping parameter of the sliding spring animation. Simple may correspond to a parameter value 5 of the stiffness parameter and a parameter value 6 of the damping parameter of the sliding spring animation. Lively may correspond to a parameter value 7 of the stiffness parameter and a parameter value 8 of the damping parameter of the sliding spring animation. Animation parameters of animations such as the tapping gravity-inspired animation and the tapping scaling animation are similar.

Optionally, a correspondence between different animation types and animation parameter values of each animation may be preset in the smartwatch. When a theme is updated based on a theme package, an animation parameter value of each animation may be determined based on an animation type in the theme package, to update the animation configuration information in the smartwatch, so as to implement user-defining of the animation in the smartwatch.

It should be noted that animation parameter values that are of a same animation and that are indicated by different animation types are at least partially different, so that different animation types correspond to different animation effects.

In another embodiment, the animation configuration information in the theme package may include animations and an animation parameter value of each animation.

For example, refer to FIG. 3D. The animations included in the animation configuration information in the theme package are still the sliding spring animation, the tapping gravity-inspired animation, the tapping scaling animation. Parameters of the animations are not listed one by one again. In this case, when the theme is updated based on the theme package in the smartwatch, the smartwatch may update the animation configuration information in the smartwatch based on the animation configuration information in the theme package, to implement user-defining of the animation in the smartwatch.

Optionally, refer to FIG. 3C and FIG. 3D. The theme package may further include static configuration information. This is not limited in embodiments of this application. The static configuration information may include a static attribute and a parameter value of a static attribute parameter, or a static attribute type. For a specific implementation, refer to the descriptions of the animation configuration information. Details are not described herein again.

The theme package in embodiments of this application is classified into two types: a theme package of a user-defined theme and a theme package of a fixed theme. Information in the theme package of the user-defined theme may be set independently by the user, and information in the theme package of the fixed theme cannot be set independently by the user.

FIG. 4A to FIG. 4C are diagrams of an interface implementation of an animation configuration method according to an embodiment of this application, and is used to describe a possible interface implementation in which a user downloads a theme package of a fixed theme for a smartwatch and updates the theme package to the smartwatch.

In this embodiment, it is assumed that the user has added the smartwatch to a first application of a mobile phone, and has completed Bluetooth pairing and connection with the smartwatch. An implementation procedure of the Bluetooth pairing and connection is not described in detail in embodiments of this application. After the mobile phone is paired and connected to the smartwatch through Bluetooth, the mobile phone and the smartwatch may communicate with each other through the Bluetooth.

FIG. 5 is a schematic flowchart of an animation configuration method provided based on the interface implementation shown in FIG. 4A to FIG. 4C according to an embodiment of this application. FIG. 6A and FIG. 6B describe an example of the animation configuration method shown in FIG. 5 based on the software structures shown in FIG. 2B and FIG. 2C.

Refer to FIG. 5. The method may include the following steps.

Step 501: The mobile phone detects a theme download request for the smartwatch, and obtains device information of the smartwatch.

Refer to FIG. 4A to FIG. 4C. The user views a device list interface shown in, for example, an interface 31 in the first application. The device list interface may include a device list. Devices included in the device list may be devices that are paired with the mobile phone through the first application. The device list interface may further set a corresponding control for each device, for the user to trigger a subsequent operation on the device. For example, the device list in the interface 31 includes the smartwatch and a smart television, a corresponding control 311 is set for the smartwatch, and a corresponding control 312 is set for the smart television. The user selects the control 311. Correspondingly, the mobile phone detects the selection operation for the control 311 corresponding to the smartwatch, that is, detects the selection operation on the smartwatch, and displays a first function selection interface corresponding to the smartwatch, for example, an interface 32. The first function selection interface may include an operation that can be performed by the user on the smartwatch. For example, the first function selection interface in the interface 32 includes theme download, and a corresponding control 321 is set, for the user to trigger theme download for the smartwatch. The user selects the control 321. Correspondingly, the mobile phone detects the selection operation of the user on the theme download control, that is, the mobile phone detects the theme download request for the smartwatch.

In a possible implementation, the mobile phone may request the device information of the smartwatch from the smartwatch in real time. The smartwatch sends the device information of the smartwatch to the mobile phone in real time in response to the request of the mobile phone, so that the mobile phone can obtain the device information of the smartwatch in real time.

In another possible implementation, the smartwatch may send the device information of the smartwatch to the mobile phone in a pairing process with the mobile phone or after pairing succeeds. The mobile phone stores the received device information of the smartwatch locally. Correspondingly, in this step, the mobile phone may obtain the device information of the smartwatch locally, and does not need to obtain the device information from the smartwatch in real time. This improves execution efficiency of obtaining the device information of the smartwatch in this step.

In still another possible implementation, if the smartwatch does not directly send the device information of the smartwatch to the mobile phone after pairing with the mobile phone succeeds, but before this step is performed, the mobile phone has obtained the device information of the smartwatch from the smartwatch in interaction with the smartwatch and cached the device information locally, the mobile phone may also obtain the device information of the smartwatch locally.

Refer to step 601 to step 603 in FIG. 6A. This step may be specifically as follows: The first application of the mobile phone detects the theme download request for the smartwatch, and requests the device information of the smartwatch from a device information management module of the smartwatch. The device information management module of the smartwatch sends the device information of the smartwatch to the first application of the mobile phone.

Step 502: The mobile phone sends a theme list request message to the server, where the theme list request message is used to request a theme that matches the device information of the smartwatch, and the theme list request message may include the device information of the smartwatch; and in response to the theme list request message, the server screens for, in stored themes, a theme whose running condition matches the device information of the smartwatch, generates a theme list of the smartwatch based on a screening result, and sends the theme list of the smartwatch to the mobile phone.

Optionally, the server may store a running condition of each theme. The running condition of the theme is a hardware configuration requirement required by an electronic device to normally run the theme. The running condition of each theme stored in the server is associated with device information of the electronic device. Therefore, in this step, the server may screen for, based on the device information of the smartwatch, the theme whose running condition matches the device information of the smartwatch. The device information of the electronic device may include hardware configuration information related to a software running capability of the electronic device, for example, may include a device type and/or a model and/or a quantity of CPU cores and/or a CPU frequency. Specifically, the server may determine whether the device information of the smartwatch meets the running condition of each theme. If the device information of the smartwatch meets the running condition of the theme, the running condition of the theme matches the device information of the smartwatch. If the device information of the smartwatch does not meet the running condition of the theme, the running condition of the theme does not match the device information of the smartwatch.

For example, it is assumed that the device information of the electronic device includes the device type and the model, and a running condition of a theme a includes: the device type is a watch, and the model is: X-1 and X-4. In this case, if a device type in device information of a smartwatch a is a watch, and a model is X-1, the server may determine that the device type in the running condition of the theme a includes the device type of the smartwatch a, and the model includes the model of the smartwatch a, and therefore, the running condition of the theme a matches the device information of the smartwatch a.

If a device type in device information of a smartwatch b is a watch, and a model is X-3, the server may determine that the device type in the running condition of the theme a includes the device type of the smartwatch b, and the model does not include the model of the smartwatch b, and therefore, the running condition of the theme a does not match the device information of the smartwatch b.

In this implementation, the server screens for, in response to the theme list request message, the theme whose running condition matches the device information of the smartwatch. Therefore, the themes stored in the server can be dynamically added or deleted, and the server can still dynamically obtain the theme list of the smartwatch. In this way, the method provided in embodiments of this application has compatibility.

Optionally, if the server stores device information of different electronic devices, the mobile phone may not obtain the device information of the smartwatch in step 501. In this implementation, the theme list request message may carry identification information of the smartwatch. Correspondingly, the server may obtain the device information of the smartwatch based on the identification information of the smartwatch, and then perform subsequent theme screening. This implementation can reduce a data processing amount of the mobile phone and a data amount of the theme list request message sent by the mobile phone to the server.

Refer to step 604 to step 606 in FIG. 6A. This step may be specifically that the first application of the mobile phone sends the theme list request message to the server; and the server obtains the theme list of the smartwatch through screening based on the device information of the smartwatch, and sends the theme list of the smartwatch to the first application of the mobile phone.

Step 503: The mobile phone receives the theme list, and displays a theme download interface of the smartwatch based on the theme list.

Refer to FIG. 4A to FIG. 4C. The theme download interface of the smartwatch is, for example, an interface 33. The theme download interface includes the theme list of the smartwatch. For example, the interface 33 includes a theme 1 to a theme 6. The theme 1 to the theme 6 are fixed themes provided by the server. The theme download interface may further include a control that is set for each theme in the theme list, for the user to trigger theme package download for each theme, for example, a control 331 corresponding to the theme 1 in FIG. 4A to FIG. 4C. The control 331 corresponding to the theme 1 is used to support the user in triggering theme package download for the theme 1.

Refer to step 607 in FIG. 6A. This step may be specifically that the first application of the mobile phone displays the theme download interface of the smartwatch.

The theme displayed on the theme download interface in this step is a theme that matches the device information of the smartwatch, or a theme that can be run based on a hardware configuration of the smartwatch. Therefore, when the user selects a theme from the theme list, the smartwatch can well support running of the theme selected by the user, to achieve an animation effect corresponding to the theme.

Step 504: The mobile phone detects a theme package download request for a first theme on the theme download interface, and sends a download request message to the server.

For example, it is assumed that the first theme is the theme 1 in FIG. 4A to FIG. 4C, if the user selects the control 331 corresponding to the theme 1, correspondingly, the mobile phone detects the control selection operation of the user on the theme 1, that is, detects the selection operation for the theme 1. In other words, the mobile phone detects the theme package download request for the theme 1.

The download request message is used to request to download a theme package of the first theme. Optionally, the download request message includes an identifier of the first theme.

Refer to step 608 and step 609 in FIG. 6B. This step may be specifically performed by the first application of the mobile phone.

Step 505: The server sends the theme package of the first theme to the mobile phone in response to the download request message.

Optionally, the server may store theme packages of the themes. In this step, the server may obtain the theme package of the first theme based on the identifier of the first theme.

Refer to step 610 in FIG. 6B. This step may be specifically that the server sends the theme package of the first theme to the first application of the mobile phone.

Step 506: The mobile phone receives the theme package of the first theme, and sends the theme package of the first theme to the smartwatch.

Optionally, the mobile phone may send the theme package of the first theme to the smartwatch through the Bluetooth. For example, refer to step 611 in FIG. 6B. This step may be specifically that the first application of the mobile phone may invoke a Bluetooth service to send the theme package of the first theme to the smartwatch.

Step 507: The smartwatch receives the theme package of the first theme, and parses the theme package to obtain animation configuration information.

Optionally, if the theme package includes static configuration information, the smartwatch may further parse the theme package to obtain the static configuration information.

Refer to step 611 and step 612 in FIG. 6B. This step may be specifically performed by a graphics engine service of the smartwatch.

Step 508: The smartwatch updates animation configuration information in a third application based on the animation configuration information in the theme package.

Optionally, the third application in the smartwatch is an application that supports animation execution and allows animation user-defining, for example, a lock screen management application. The third application may be a system application or a third-party application in the smartwatch. When the third application executes an animation, if the animation includes an animation picture, the third application may directly display the corresponding animation picture. If the animation includes a vibration effect, the third application may transmit vibration waveform information to a motor driver at a kernel layer based on the animation configuration information, so that the motor driver drives a motor based on the vibration waveform information to implement the vibration effect. If the animation includes a sound, the third application may transmit a sound signal to a speaker driver at the kernel layer based on the animation configuration information, so that the speaker driver can drive a speaker to play the sound signal.

Then, the third application may play the animation based on updated animation configuration information, that is, play the animation based on the animation configuration information in the theme package.

Optionally, the smartwatch may further update animation configuration information of an operating system based on the animation configuration information in the theme package. Therefore, when a new application that supports of animation user-defining is installed in the smartwatch, the animation configuration information may be obtained from the operating system (for example, the animation management module) of the smartwatch, so that the user can independently set an animation in the newly installed application.

Refer to step 613 and step 614 in FIG. 6B. When the animation configuration information of the operating system is updated, the graphics engine service of the smartwatch may specifically send the animation configuration information in the theme package to the animation management module, and the animation management module updates the animation configuration information based on the animation configuration information.

Optionally, before step 508, the following step may be further included: The smartwatch installs the third application, and updates the animation configuration information of the third application based on the animation configuration information of the operating system of the smartwatch when the smartwatch determines that the third application supports animation user-defining.

Refer to step 615 and step 616 in FIG. 6B. In step 508, the graphics engine service of the smartwatch may specifically send the animation configuration information in the theme package to the third application, and the third application updates the animation configuration information in the third application based on the animation configuration information.

Optionally, refer to step S1 in FIG. 6A. To enable the graphics engine service of the smartwatch to learn whether the smartwatch supports animation user-defining, the animation management module may send indication information indicating whether the smartwatch supports animation user-defining to the graphics engine service in advance. For example, the animation management module may send the indication information to the graphics engine service when the animation management module is started. In embodiments of this application, an example in which the animation management module indicates, to the graphics engine service, that the smartwatch supports animation user-defining is used.

Optionally, refer to step S2 in FIG. 6A. To enable the graphics engine service to learn whether the third application supports animation user-defining, the third application may register, in advance with the graphics engine service, whether the third application supports animation user-defining. For example, when the third application is started, the third application may register, with the graphics engine service, whether the third application supports animation user-defining. In embodiments of this application, an example in which the third application registers, with the graphics engine service, that the third application supports animation user-defining is used.

Optionally, refer to step S3 to step S5 in FIG. 6A. After the third application registers, with the graphics engine service, that the third application supports animation user-defining, the graphics engine server may request animation configuration information from the animation management module. The animation management module sends the animation configuration information stored in the animation management module to the graphics engine service in response to the request. The graphics engine service sends the received animation configuration information to the third application. Through the foregoing processing, the animation configuration information in the smartwatch can be synchronized to the third application, so that the third application can execute an animation based on the animation configuration information of the smartwatch.

Optionally, if the theme package of the first theme includes the static configuration information, the graphics engine service may further obtain the static configuration information through parsing in step 612. Then, the graphics engine service may send the static configuration information to a static attribute management module of the operating system, the third application, and the like, to update static configuration information in the static attribute management module and the third application, so that the user can independently set static configuration information in the smartwatch.

In embodiments of this application shown in FIG. 5, the user downloads, in the mobile phone, a theme package for the smartwatch, and sends the theme package to the smartwatch. The smartwatch updates a theme based on the theme package. In this way, the user can independently set animation configuration information in the smartwatch, that is, independently set an animation in the smartwatch.

Different from that the server screens the theme list of the smartwatch in step 502, in another embodiment provided in this application, step 502 may be replaced with the following steps:

The server sends running conditions of all themes to the mobile phone. The mobile phone screens for, in the running conditions, a theme whose running condition matches the device information of the smartwatch, and generates the theme list of the smartwatch based on a screening result.

For an implementation in which the mobile phone screens for, in the running conditions, the theme whose running condition matches the device information of the smartwatch, refer to an implementation in which the server screens for, in the running conditions, the theme whose running condition matches the device information of the smartwatch in step 502. Details are not described herein again.

This embodiment can reduce data processing pressure of the server.

Different from providing, for the user, downloading of the fixed themes such as the theme 1 to the theme 6 in the theme selection interface displayed by the mobile phone in FIG. 4A to FIG. 4C, in another embodiment provided in this application, downloading of a user-defined theme may be provided for the user in the theme selection interface displayed by the mobile phone.

FIG. 7A-1 to FIG. 7A-4 and FIG. 7B-1 to FIG. 7B-4 are diagrams of another interface implementation of an animation configuration method according to an embodiment of this application, and are used to describe a possible interface implementation in which a user downloads a theme package of a user-defined theme for a smartwatch and updates the theme package to the smartwatch.

With reference to the interface implementation shown in FIG. 7A-1 to FIG. 7A-4 and FIG. 7B-1 to FIG. 7B-4, an embodiment of this application provides an animation configuration method shown in FIG. 8. FIG. 9A to FIG. 9C describe an example of the animation configuration method shown in FIG. 8 based on the software structures shown in FIG. 2B and FIG. 2C.

Step 801: A mobile phone detects a theme package download request for a user-defined theme in a theme download interface, and sends a first configuration information request message to a server; and in response to the first configuration information request message, the server determines first animation configuration-related information of a user-defined theme corresponding to a smartwatch, and sends the first animation configuration-related information to the mobile phone.

The first configuration information request message is used to request the first animation configuration-related information of the user-defined theme of the smartwatch from the server.

Refer to FIG. 7A-1 to FIG. 7A-4 and FIG. 7B-1 to FIG. 7B-4. The mobile phone may display a theme selection interface shown in, for example, an interface 33-a. The theme selection interface shown in the interface 33-a includes a control 332 corresponding to the user-defined theme, to support a user in triggering theme package downloading of the user-defined theme. If the user selects the control 332 corresponding to the user-defined theme, correspondingly, the mobile phone detects the selection operation of the user on the user-defined theme control, that is, the mobile phone detects a theme package download request for the user-defined theme.

Optionally, if the user-defined theme further includes static configuration information, the first configuration information request message may be further used to request first static configuration-related information of the user-defined theme of the smartwatch from the server.

Optionally, the first animation configuration-related information may include an animation type and an option of the animation type, or the first animation configuration-related information may include an animation supported by the smartwatch and constraint information of an animation parameter. The constraint information may include a plurality of parameter value options or a parameter value range. For example, in FIG. 7A-1 to FIG. 7A-4, the parameter value option of the animation type may include soothing, simple, lively, and the like. For example, in FIG. 7B-1 to FIG. 7B-4, constraint information of a "stiffness" parameter of a sliding spring animation may include a parameter value range [0, 6], and constraint information of a "damping" parameter may include a parameter value range [0, 7].

Optionally, the first animation configuration-related information may match device information of the smartwatch. Specifically, a higher hardware configuration of the smartwatch indicates a higher software running capability, and generally, more parameter value options and a larger parameter value range that are provided by the constraint information in the first animation configuration-related information. A lower hardware configuration of the smartwatch indicates a lower software running capability, and generally, fewer parameter value options and a smaller parameter value range that are provided by the constraint information in the first animation configuration-related information.

For example, it is assumed that a quantity of cores of a CPU of a smartwatch a is 2, and a frequency is 1.4 GHz, a quantity of cores of a CPU of a smartwatch b is 4, a frequency is 1.8 GHz, and a hardware configuration of the smartwatch b is higher than a hardware configuration of the smartwatch a.

In this case, an option of an animation type in first animation configuration-related information of the smartwatch a may include, for example, soothing and simple that have low hardware configuration requirements. Correspondingly, an option of an animation type provided for the user in an animation type setting interface of the smartwatch a may include the two types: soothing and simple. An option of an animation type in first animation configuration-related information of the smartwatch b may include, for example, soothing and simple that have low hardware configuration requirements, and a lively type that has a high hardware configuration requirement. Correspondingly, an option of an animation type provided for the user in an animation type setting interface of the smartwatch b may include the three types: soothing, simple, and lively.

Alternatively, if the first animation configuration-related information includes the parameter value range of the "stiffness" parameter of the sliding spring animation, for the smartwatch a and the smartwatch b, the hardware configuration of the smartwatch a is lower, and a parameter value range of a "stiffness" parameter corresponding to the smartwatch a may be, for example, [0, 5]; and the hardware configuration of the smartwatch b is higher, and a parameter value range of a "stiffness" parameter corresponding to the smartwatch b may be, for example, [0, 10].

In an embodiment, the server may store first animation configuration-related information of a user-defined theme of each electronic device based on the electronic device. In this case, the first configuration information request message may include a device identifier of the smartwatch. In this step, the server may obtain the first animation configuration-related information of the user-defined theme of the smartwatch based on the device identifier of the smartwatch.

In another embodiment, the server may separately store first animation configuration-related information of a user-defined theme corresponding to each category based on a category of the electronic device. In this case, the first configuration information request message may include a category of the smartwatch. In this step, the server may obtain the first animation configuration-related information of the user-defined theme of the smartwatch based on the category of the smartwatch. This embodiment can be used to save storage space of the server.

The category of the electronic device may be classified based on device information such as a device type, a device model, and/or a hardware configuration of the electronic device. A specific classification standard is not limited in embodiments of this application. For example, if hardware parameters of smartwatches of a same model provided by a smartwatch manufacturer are the same, the server may correspondingly set first animation configuration-related information of user-defined themes based on the model of the smartwatches, and does not need to correspondingly set first animation configuration-related information of a user-defined theme for each smartwatch of the same model. This can save storage space of the server. Alternatively, if quantities of CPU cores of smartwatches of a same model provided by a smartwatch manufacturer are different, the server may correspondingly set first animation configuration-related information of user-defined themes based on the model and the quantities of CPU cores of the smartwatches. This can also save storage space of the server.

In still another embodiment, the server may dynamically determine, based on the device information of the smartwatch, the first animation configuration-related information of the user-defined theme corresponding to the smartwatch. In this case, the first configuration information request message may include the device information of the smart watch.

Optionally, if the server stores the device information of the smartwatch or caches the device information of the smartwatch sent by the mobile phone, the first configuration information request message may not include the device information of the smartwatch, but include an identifier of the smartwatch, for the server to locally obtain the device information of the smartwatch based on the identifier of the smartwatch.

In a possible implementation, if the first animation configuration-related information includes the animation type and the option of the animation type, the server may preset a running condition of each option of the animation type. The running condition may be associated with device information of an electronic device. In this case, in this step, the server may determine whether the device information of the smartwatch meets the running condition of each option of the animation type. If the device information meets the running condition, the option is an option that matches the smartwatch, and the first animation configuration-related information of the smartwatch includes the option. If the device information does not meet the running condition, the first animation configuration-related information of the smartwatch does not include the option.

The example in this step is continued. It is assumed that a running condition of the lively type includes: a minimum quantity of CPU cores is 4, and a minimum frequency is 1.6 GHz. In this case, the smartwatch b meets a running condition of the lively type, and the option of the animation type in the first animation configuration-related information of the smartwatch b includes the lively type.

In another possible implementation, if the first animation configuration-related information includes the animation and the constraint information of the animation parameter, the server may preset a running condition of each animation. The running condition of the animation may be associated with device information of an electronic device. In this case, in this step, the server may determine whether the device information of the smartwatch meets the running condition of each animation. If the device information meets the running condition, the animation is an animation that matches the smartwatch, and the first animation configuration-related information of the smartwatch includes the animation. If the device information does not meet the running condition, the first animation configuration-related information of the smartwatch does not include the animation. The server may further preset a running condition of an option or a parameter value range of each animation parameter of each animation. The running condition may also be associated with the device information of the electronic device. In this case, in this step, if the server determines that the first animation configuration-related information of the smartwatch includes an animation, the server may match the device information of the smartwatch with a running condition of an option of an animation parameter of the animation or a running condition of a parameter value range of an animation parameter of the animation, to further determine constraint information of each animation parameter of the animation.

The example in this step is continued. It is assumed that the running condition of the sliding spring animation includes: a minimum quantity of cores of the CPU is 2, and a minimum frequency is 1.6 GHz. In this case, the smartwatch b meets a running condition of the sliding spring animation, and the first animation configuration-related information of the smartwatch b includes the sliding spring animation.

It is assumed that a running condition of a parameter value range [0, 3] of the "stiffness" parameter of the sliding spring animation includes: a minimum quantity of cores of the CPU is 4, and a minimum frequency is 1.6 GHz, and a running condition of a parameter value range [0, 6] includes: a minimum quantity of cores of the CPU is 4, and a minimum frequency is 1.8 GHz. In this case, the smartwatch b meets both the running condition of the parameter value range [0, 3] and the running condition of the parameter value range [0, 6]. In the first animation configuration-related information of the smartwatch b, the parameter value range of the "stiffness" parameter of the sliding spring animation may be determined as [0, 6]. In other words, when running conditions of a plurality of parameter value ranges are met, a parameter value range with a large range is selected.

In this embodiment, the server determines, based on the device information of the smartwatch, the first animation configuration-related information of the user-defined theme corresponding to the smartwatch. If the foregoing animation type, animation, or the like stored in the server changes or is added or deleted, the first animation configuration-related information that is of the user-defined theme corresponding to the smartwatch and that is determined by the server also adaptively changes. This makes the first animation configuration-related information of the user-defined theme determined by the server more flexible and compatible.

Optionally, if a theme package of the user-defined theme includes static configuration information, the server may alternatively determine, for the smartwatch in this step, first static configuration-related information of the user-defined theme corresponding to the smartwatch. For an implementation of the first static configuration-related information and a method for determining the first static configuration-related information by the server, refer to the descriptions of the first animation configuration-related information in embodiments of this application. Details are not described herein again.

In this step, the first animation configuration-related information matches the device information of the smartwatch. For example, if device information (for example, models and hardware configurations) of two smartwatches is different, parameter value ranges of a same animation parameter of a same animation that are supported by the two smartwatches may be different. Therefore, when the mobile phone displays a setting-related interface of the smartwatch based on the first animation configuration-related information in a subsequent step, it can be ensured that the user independently sets an animation parameter within a range that can be supported by the smartwatch. Further, the smartwatch can execute an animation based on the parameter set by the user, to prevent a problem that an animation execution effect is poor or the animation cannot be executed due to a hardware limitation of the smartwatch. For example, a parameter value range of a "stiffness" parameter that can be supported by a smartwatch 1 is, for example, [0, 6]. In this case, the user may set a parameter value of the "stiffness" parameter between 0 and 6, inclusive. The user cannot set the "stiffness" parameter of the smartwatch 1 to a parameter value that exceeds an execution capability of the smartwatch 1, for example, 10. A hardware configuration condition of a smartwatch 2 is higher than that of the smartwatch 1. A parameter value range of a "stiffness" parameter that can be supported by the smartwatch 2 may be, for example, [0, 10]. In this case, the user may set a parameter value of the "stiffness" parameter between 0 and 10, inclusive. The user cannot set the "stiffness" parameter of the smartwatch 2 to a parameter value that exceeds an execution capability of the smartwatch 2, for example, 15.

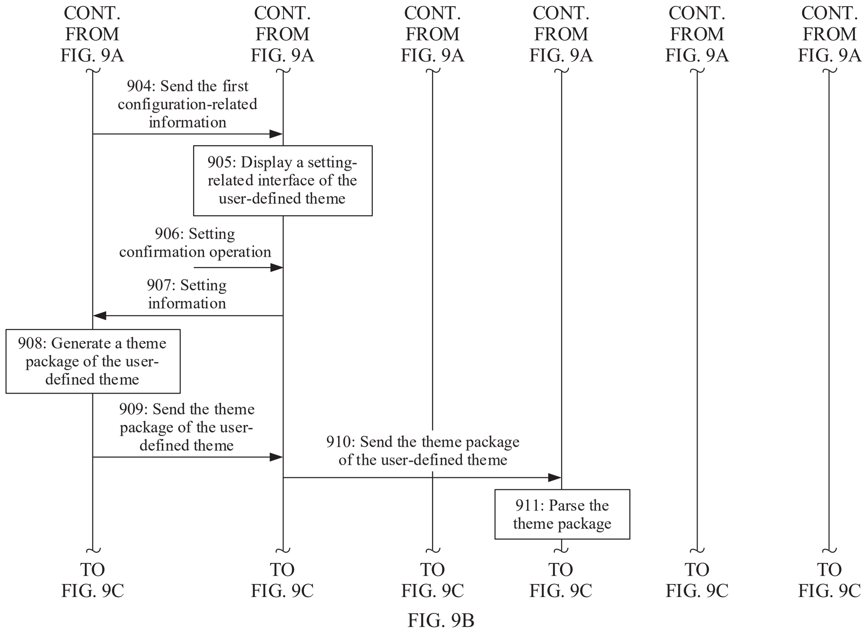

Refer to step 901 to step 904 in FIG. 9A and FIG. 9B. This step may be specifically that a first application of the mobile phone detects a download request for the user-defined theme, and sends the first configuration information request message of the user-defined theme to the server; and the server obtains the first animation configuration-related information of the user-defined theme through screening based on the device information of the smartwatch, and sends the first animation configuration-related information of the user-defined theme to the first application of the mobile phone.

Step 802: The mobile phone displays a setting-related interface of the user-defined theme of the smartwatch based on the first animation configuration-related information of the user-defined theme.

The setting-related interface of the user-defined theme provided in embodiments of this application is used to support the user in independently setting animation configuration information in the user-defined theme. For an implementation of the setting-related interface of the user-defined theme, refer to an interface 34 to an interface 36 in FIG. 7A-2 to FIG. 7A-4, and an interface 34-b, an interface 35-b, and an interface 36-b in FIG. 7B-2 to FIG. 7B-4.

Refer to FIG. 7A-1 to FIG. 7A-4. When detecting the theme package download request of the user for the user-defined theme, the mobile phone may display a main setting interface of the user-defined theme of the smartwatch, for example, the interface 34. The main setting interface of the user-defined theme may include an animation type, and a corresponding control is a control 341, for the user to trigger setting of the animation type.

The user selects the control 341 corresponding to the animation type. Correspondingly, the mobile phone detects the selection operation of the user for the animation type, that is, detects a setting request of the user for the animation type, and displays an animation type setting interface, for example, the interface 35. The animation type setting interface may include an option of the animation type and a control corresponding to the option of the animation type. For example, in the interface 35, the option of the animation type includes soothing, simple, and lively. A control 351 is a control corresponding to the option "soothing", for the user to trigger to set the animation type to soothing. The user selects the control 351 corresponding to the option "soothing" of the animation type. Correspondingly, the mobile phone detects the selection operation performed by the user on the option "soothing", that is, detects a setting request for setting the animation type to the option "soothing". A parameter value of the animation type is recorded as soothing, and "√" is displayed on the control 351 as a selection mark. Then, the user may return to the main setting interface of the user-defined theme. In this case, the main interface is shown as the interface 36, and the animation type in the main interface is recorded as "soothing".

The foregoing interface implementation enables the user to complete independent setting of the animation in the user-defined theme.

Refer to FIG. 7B-1 to FIG. 7B-4. After detecting the theme package download request of the user for the user-defined theme, the mobile phone may display a main setting interface of the user-defined theme of the smartwatch, for example, shown in the interface 34-a. The main setting interface of the user-defined theme may include a list of animations supported by the smartwatch. For example, the interface 34-a includes a sliding spring animation, a tapping gravity-inspired animation, and a tapping scaling animation, and a corresponding control is set for each animation, for the user to trigger setting of an animation parameter of the animation. For example, a control corresponding to the sliding spring animation is a control 342, for the user to trigger setting of an animation parameter of the sliding spring animation.

Optionally, the main setting interface of the user-defined theme may further set a corresponding selection control for each animation, for the user to select the animation included in the user-defined theme. For example, a selection control 343 corresponding to the sliding spring animation is displayed in the interface 34-a. If the user selects the animation, the user-defined theme may include the sliding spring animation. Otherwise, the user-defined theme does not include the sliding spring animation.

The user selects the control 342 corresponding to the sliding spring animation. Correspondingly, the mobile phone detects the selection operation of the user for the sliding spring animation, that is, detects a setting request of the user for the sliding spring animation, and displays a sliding spring animation setting interface, for example, the interface 35-a. The sliding spring animation setting interface may include: a "stiffness" parameter and a parameter setting control 352 of the "stiffness" parameter; and a "damping" parameter and a parameter setting control 353 of the "damping" parameter. A parameter value range of the animation parameter matches the device information of the smartwatch. The user performs operations on the parameter setting control 352 and the parameter setting control 353 respectively, to complete setting of the "stiffness" parameter and the "damping" parameter. Correspondingly, the mobile phone may determine, based on the user operation, parameter values set by the user for the "stiffness" parameter and the "damping" parameter. Then, the user may return to the main setting interface of the user-defined theme, for example, the interface 36-a.

The foregoing interface implementation enables the user to complete independent setting of the animation parameter in the user-defined theme.

Optionally, the user-defined theme may further include static configuration information. Therefore, the main setting interface of the user-defined theme may further display a static attribute that matches the smartwatch or a static attribute type similar to the animation type. For example, in the interface 34 and the interface 34-a, a theme color, an icon style, and the like that are static attributes are displayed. The mobile phone may also provide a setting interface similar to the interface 35 and the interface 35-a, to implement independent setting of the static attribute in the user-defined theme by the user. Details are not described herein again.

Refer to step 905 in FIG. 9B. This step may be specifically performed by the first application of the mobile phone.

Step 803: The mobile phone detects a setting confirmation operation for the user-defined theme, the mobile phone sends setting information of the user-defined theme to the server, and the server generates a theme package of the user-defined theme based on the setting information of the user-defined theme, and sends the theme package to the mobile phone.

Refer to FIG. 7A-1 to FIG. 7A-4 and FIG. 7B-1 to FIG. 7B-4. The user may tap an OK control 361 or a control 362 in the main setting interface of the user-defined theme to perform setting confirmation. Correspondingly, the mobile phone detects the setting confirmation operation for the user-defined theme.

Optionally, the mobile phone may determine the setting information of the user-defined theme based on a user operation detected in a setting-related interface of the user-defined theme. The setting information of the user-defined theme may include setting information of an animation, and may further include setting information of a static attribute. For example, in FIG. 7A-1 to FIG. 7A-4, the setting information of the user-defined theme may include: (animation type - soothing), (theme color - red), (icon - style 2), and the like. For example, in FIG. 7B-1 to FIG. 7B-4, the setting information of the user-defined theme may include: (theme color - red), (icon - style 2), sliding spring animation - (stiffness, 3) - (damping, 5), and the like.

Optionally, when generating the theme package of the user-defined theme based on the setting information of the user-defined theme, the server may perform processing such as format conversion, encryption, and packaging on the setting information of the user-defined theme, to obtain the theme package of the user-defined theme. A specific implementation is not limited in embodiments of this application.

Refer to step 906 to step 909 in FIG. 9B. This step may be specifically that the first application of the mobile phone detects the setting confirmation operation for the user-defined theme, sends the setting information of the user-defined theme to the server, and the server generates the theme package of the user-defined theme based on the setting information of the user-defined theme, and sends the theme package to the first application of the mobile phone.

In another embodiment provided in this application, in this step, the mobile phone may alternatively generate the theme package of the user-defined theme based on the setting information of the user-defined theme.

Step 804: The mobile phone sends the theme package of the user-defined theme to the smartwatch.

Refer to step 910 in FIG. 9B. This step may be specifically performed by the first application of the mobile phone.

Step 805: The smartwatch receives the theme package of the user-defined theme, and parses the theme package of the user-defined theme to obtain the animation configuration information.

Optionally, if the theme package of the user-defined theme includes the static configuration information, the smartwatch may further parse the theme package to obtain the static configuration information, to update the static configuration information in the smartphone.

Refer to step 910 and step 911 in FIG. 9B. This step may be specifically that a graphics engine service of the smartwatch receives the theme package of the user-defined theme, and parses the theme package to obtain the animation configuration information.

Step 806: The smartwatch updates animation configuration information in a third application based on the animation configuration information in the theme package.

For an implementation of this step, refer to step 508. Details are not described herein again.

In embodiments of this application shown in FIG. 8, animation configuration information in an animation management module and the third application in the smartwatch is updated. Because the animation configuration information included in the theme package of the user-defined theme is determined based on user-defined setting, the animation configuration information in the smartwatch is updated based on independent setting of the user. Therefore, the user can independently set an animation in the smartwatch, and user experience is improved.

FIG. 10A-1 to FIG. 10A-3 and FIG. 10B-1 to FIG. 10B-3 are diagrams of another interface implementation of an animation configuration method according to an embodiment of this application. In this embodiment, a user may independently set an animation in a smartwatch on an animation setting-related interface provided by a first application of a mobile phone. Specifically, in an embodiment shown in FIG. 10A-1 to FIG. 10A-3, the user may set an animation type of the smartwatch in an interface provided by the mobile phone for the user. In an embodiment shown in FIG. 10B-1 to FIG. 10B-3, the user may set, in an interface provided by the mobile phone for the user, an animation parameter of an animation that can be supported by the smartwatch.

FIG. 11 is a schematic flowchart of an animation configuration method provided based on interface implementations shown in FIG. 10A-1 to FIG. 10A-3 and FIG. 10B-1 to FIG. 10B-3 according to an embodiment of this application. FIG. 12A and FIG. 12B describe an example of the animation configuration method shown in FIG. 11 based on the software structures shown in FIG. 2B and FIG. 2C.

As shown in FIG. 11, the method may include the following steps.

Step 1101: A mobile phone detects an animation setting request for a smartwatch.

Refer to FIG. 10A-1 to FIG. 10A-3 and FIG. 10B-1 to FIG. 10B-3. The mobile phone displays a device list interface, for example, an interface 31, detects a selection operation for the smartwatch in the device list interface, and displays a second function selection interface, for example, an interface 37. The second function selection interface may include an animation setting control, for example, a control 371. The mobile phone detects a selection operation for the animation setting control, that is, detects the animation setting request for the smartwatch.

Refer to step 1201 in FIG. 12A. This step may be specifically performed by a first application of the mobile phone.

Step 1102: The mobile phone sends a second animation information request message to a server; and the server obtains second animation configuration-related information of the smartwatch in response to the animation information request message, and sends the second animation configuration-related information to the mobile phone.

The second animation information request message is used to request the second animation configuration-related information of the smartwatch.

For an implementation in which the server obtains the second animation configuration-related information of the smartwatch, refer to step 801. A difference mainly lies in that the first animation configuration-related information of the user-defined theme in step 801 is replaced with the second animation configuration-related information in this step.

In this implementation, an animation that can be supported by the smartwatch may be added. For example, the smartwatch originally can support a sliding spring animation. However, in this implementation, the mobile phone may obtain an animation, for example, a tapping scaling animation, that matches the smartwatch and that is other than the sliding spring animation. If the user selects and sets the animation, the tapping scaling animation may be added to the smartwatch in a subsequent step, so that the smartwatch can support the sliding spring animation and the tapping scaling animation.

In another embodiment provided in this application, if the smartwatch stores animation configuration-related information of the smartwatch, the mobile phone may send a third animation information request message to the smartwatch in this step, where the third animation information request message is used to request the second animation configuration-related information of the smartwatch; and the smartwatch sends the second animation configuration-related information of the smartwatch to the mobile phone in response to the third animation information request message.

In this implementation, the mobile phone does not need to communicate with the server, and only needs to communicate with the smartwatch, to support the user in independently setting an animation in the smartwatch.

Step 1103: The mobile phone displays an animation setting-related interface of the smartwatch based on the second animation configuration-related information, and determines animation setting information based on a user operation detected on the animation setting-related interface.

In this step, the mobile phone displays the animation setting-related interface to support the user in independently setting an animation in the smartwatch.

Refer to FIG. 10A-1 to FIG. 10A-3. It is assumed that the second animation configuration-related information includes an animation type and an animation type option, the animation setting-related interface may include a main animation setting interface, for example, an interface 38. For an implementation of the interface 38, refer to the interface 35. Details are not described herein again.

Refer to FIG. 10B-1 to FIG. 10B-3. It is assumed that the second animation configuration-related information includes an animation supported by the smartwatch and constraint information of an animation parameter, and the animation setting-related interface may include a main animation setting interface, for example, an interface 38-a and a sliding spring animation setting interface, for example, an interface 39-a.

The mobile phone displays, based on the animation supported by the smartwatch, the main animation setting interface, for example, the interface 38-a. The main animation setting interface may include the animation supported by the smartwatch. For a specific implementation of the interface 38-a, refer to the interface 34-a. Details are not described herein again.

The mobile phone detects a selection operation for a first animation (for example, the sliding spring animation), and displays a first animation setting interface, for example, 39-a based on constraint information of an animation parameter of the first animation. The first animation setting interface may include the animation parameter of the first animation and a parameter setting control (for example, a control 391 and a control 392). The parameter setting control is set based on the constraint information of the animation parameter.

The mobile phone detects an operation performed by the user on a parameter setting control of a first animation parameter, and determines, based on the operation, that the animation setting information includes: the first animation parameter is a parameter value indicated by the operation.

Refer to step 1205 and step 1206 in FIG. 12A and FIG. 12B. This step may be specifically performed by the first application of the mobile phone.

Step 1104: The mobile phone detects a setting confirmation operation for the animation of the smartwatch, and sends the animation setting information to the smartwatch.

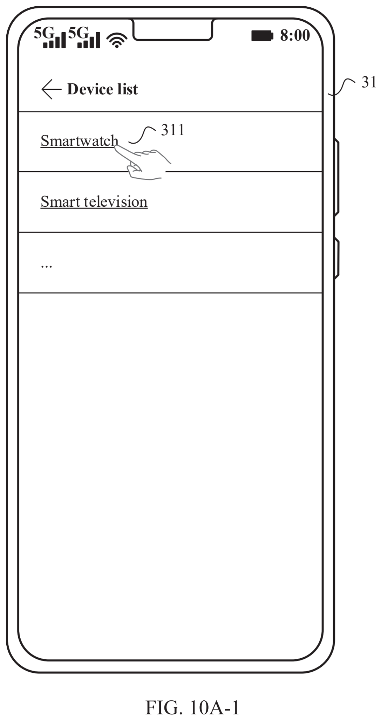

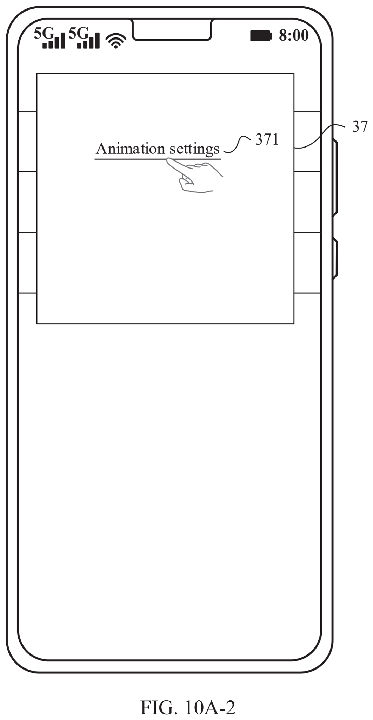

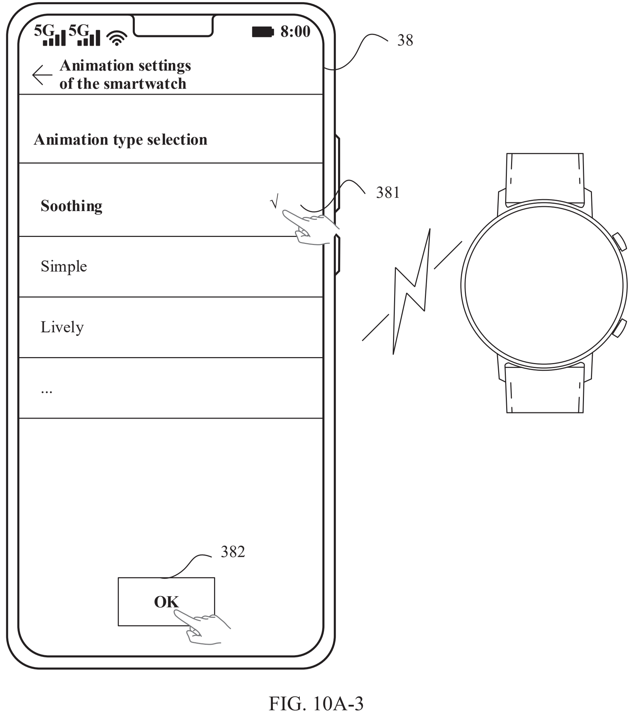

Refer to FIG. 10A-3. The user may tap an OK control 382 in the main animation setting interface to perform setting confirmation. Correspondingly, the mobile phone detects the selection operation performed by the user on the OK control 382, that is, detects the setting confirmation operation for the animation.

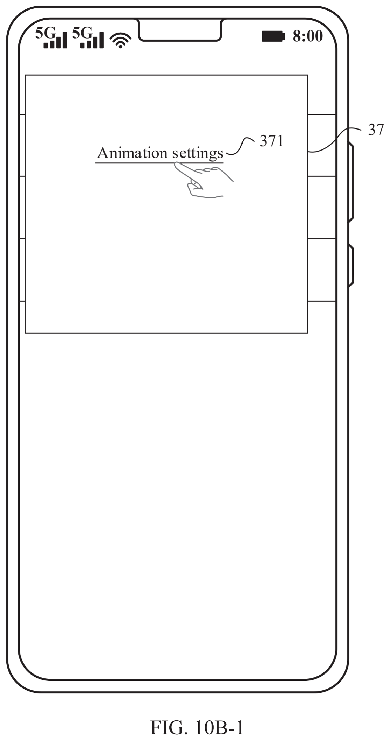

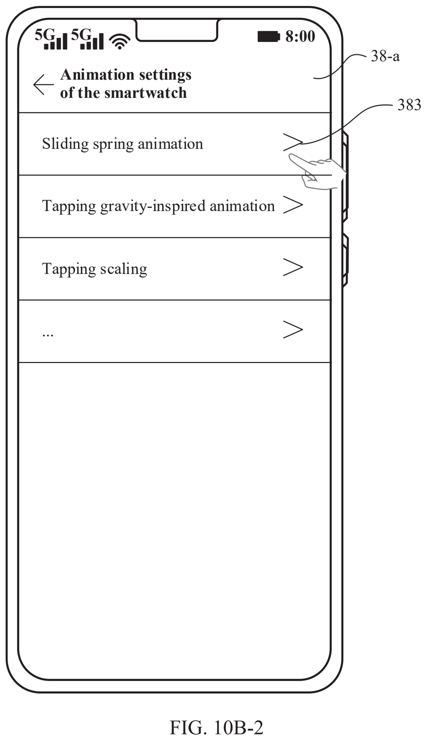

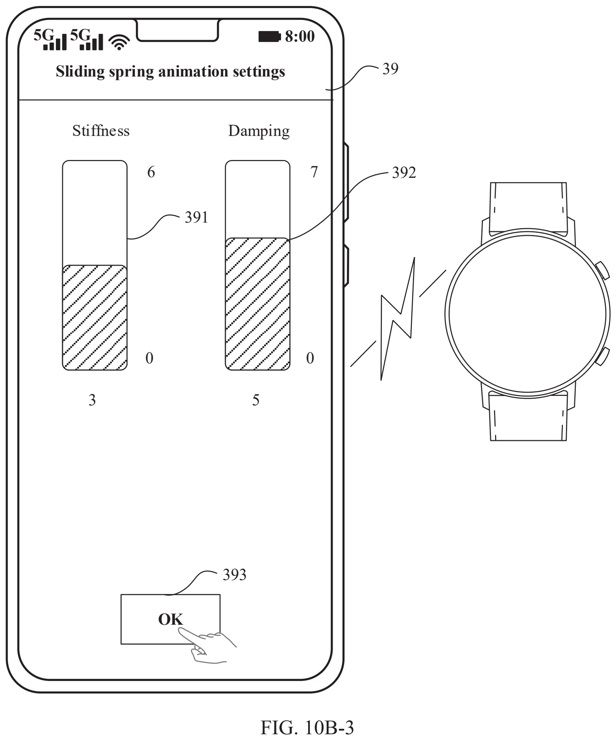

Refer to FIG. 10B-3. After completing parameter setting for the sliding spring animation, the user may select an OK control 393 in an interface 39. Correspondingly, the mobile phone detects a setting confirmation operation for the sliding spring animation of the smartwatch.

Refer to step 1207 in FIG. 12B. This step may be specifically performed by the first application of the mobile phone.

Step 1105: The smartwatch receives the animation setting information, and updates animation configuration information in a third application based on the received animation setting information.

Then, the third application may perform the animation based on updated animation configuration information, that is, based on information set by the user in the mobile phone. In this way, independent setting of the animation in the mobile phone by the user is implemented.

For an implementation of this step, refer to step 508. A difference mainly lies in that in step 508, the animation configuration information obtained through parsing the theme package is used to update the animation configuration information of the third application, the animation configuration information of the operating system, and the like, and in this step, the smartwatch updates the animation configuration information of the third application, animation configuration information of an operating system, and the like based on the received animation setting information.

In embodiments of this application shown in FIG. 11, the mobile phone first obtains the second animation configuration-related information of the smartwatch, and then displays the animation setting-related interface of the smartwatch, for example, the main animation setting interface or a setting interface of an animation. In another embodiment provided in this application, the mobile phone may obtain corresponding second animation configuration-related information from the server based on a to-be-displayed animation setting-related interface.

In an embodiment, if the second animation configuration-related information includes an animation supported by the smartwatch, an animation parameter of the animation, and constraint information of each animation parameter, after detecting the animation setting request for the smartwatch, the mobile phone may request only the animation supported by the smartwatch from the server. Correspondingly, the server sends the animation supported by the smartwatch to the mobile phone. The mobile phone displays the main animation setting interface (for example, the interface 38-a) of the smartwatch based on the animation supported by the smartwatch. The mobile phone detects a setting request for the first animation (for example, the sliding spring animation) in the main animation setting interface, requests the animation parameter of the first animation and the constraint information of each animation parameter from the server, and displays a setting interface (for example, the interface 39-a) of the first animation based on the animation parameter and the constraint information. This embodiment can be used to prevent transmission of redundant data, and save resources for transmission between the mobile phone and the server.

In another embodiment provided in this application, the user may implement independent setting of an animation in the smartwatch in an animation setting-related interface provided by the smartwatch.

FIG. 13 is still another schematic flowchart of an animation configuration method provided based on the foregoing interface implementations according to an embodiment of this application. FIG. 14A and FIG. 14B describe an example of the animation configuration method shown in FIG. 13 based on the software structures shown in FIG. 2B and FIG. 2C.

As shown in FIG. 13, the method may include the following steps.

Step 1301: A smartwatch displays a third function selection interface, where the third function selection interface may include an animation setting control.

For the third function selection interface displayed by the smartwatch, refer to the interface 37 in FIG. 10A-2 and FIG. 10B-1. Details are not described herein again.

Refer to step 1401 in FIG. 14A. This step may be specifically performed by a second application in the smartwatch. The second application may be an application that is in the smartwatch and that is used to support a user in independently setting an animation of the smartwatch, for example, a setting application.

Step 1302: The smartwatch detects a selection operation for the animation setting control, and the smartwatch displays an animation setting-related interface.

Optionally, the smartwatch may specifically display the animation setting-related interface based on third animation configuration-related information prestored in the smartwatch.

Optionally, the third animation configuration-related information may include an animation type and an option of the animation type, or the third animation configuration-related information may include an animation supported by the smartwatch and constraint information of an animation parameter.

For an implementation of the animation setting-related interface in this step, refer to FIG. 10A-1 to FIG. 10A-3 and FIG. 10B-1 to FIG. 10B-3. Details are not described herein again.

Refer to step 1402 to step 1407 in FIG. 14A. This step may be specifically that the second application of the smartwatch detects the selection operation for the animation setting control, that is, detects an animation setting request, and requests third animation setting-related information from a graphics engine service; the graphics engine service requests the third animation setting-related information from an animation management module; the animation management module sends the third animation setting-related information to the graphics engine service; the graphics engine service sends the third animation setting-related information to the second application; and the second application displays the animation setting-related interface based on the third animation setting-related information.

Step 1303: The smartwatch determines animation setting information based on a user operation detected in the animation setting-related interface.

In this step, the animation setting-related interface is used to support the user in independently setting the animation in the smartwatch.

For an implementation of this step, refer to step 1103. A difference mainly lies in that an execution body changes from the mobile phone to the smartwatch.

Refer to step 1408 in FIG. 14A. This step may be specifically performed by the second application in the smartwatch.

Step 1304: The smartwatch detects an animation setting confirmation operation, and updates animation configuration information in a third application based on the animation setting information.

Then, the third application may perform the animation based on updated animation configuration information, that is, based on the animation setting information set by the user in the smartwatch. In this way, independent setting of the animation in the smartwatch by the user is implemented.

For an implementation of this step, refer to step 508. A difference mainly lies in that in step 508, the animation configuration information obtained through parsing the theme package is used to update the animation configuration information of the third application, the animation configuration information of the operating system, and the like, and in this step, the smartwatch updates the animation configuration information of the third application, animation configuration information of an operating system, and the like based on the animation setting information determined by the smartwatch.

An embodiment of this application further provides a first electronic device, including a processor and a memory. The processor is configured to perform the method provided in embodiments of this application.

An embodiment of this application further provides a second electronic device, including a processor and a memory. The processor is configured to perform the method provided in embodiments of this application.

An embodiment of this application further provides a server, including a processor and a memory. The processor is configured to perform the method provided in embodiments of this application.

An embodiment of this application further provides an animation configuration system, including the first electronic device and the second electronic device provided in embodiments of this application, or including the first electronic device, the second electronic device, and the server provided in embodiments of this application.

An embodiment of this application further provides a computer-readable storage medium. The computer-readable storage medium stores a computer program. When the computer program is run on a computer, the computer is enabled to perform the method provided in embodiments of this application.

An embodiment of this application further provides a computer program product. The computer program product includes a computer program. When the computer program is run on a computer, the computer is enabled to perform the method provided in embodiments of this application.

In embodiments of this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B may be in a singular form or a plural form. The character "/" generally indicates an "or" relationship between associated objects. "At least one of the following items" and a similar expression refer to any combination of these items, including a single item or any combination of a plurality of items. For example, at least one of a, b, and c may indicate a, b, c, a and b, a and c, b and c, or a, b, and c, where a, b, and c may be singular or plural.

A person of ordinary skill in the art may be aware that units and algorithm steps described in embodiments disclosed in this specification can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, when any of the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. An animation configuration method, applied to a first electronic device, wherein the method comprises:
detecting a theme download request for a second electronic device, and displaying a first interface, wherein the first interface comprises a theme list, and a running condition of a theme in the theme list matches device information of the second electronic device;
detecting a selection operation for a first theme in the theme list, and obtaining a theme package of the first theme, wherein the theme package of the first theme comprises first information, and the first information indicates an animation parameter value of an animation; and
sending the theme package of the first theme to the second electronic device, for the second electronic device to update an animation parameter value of an animation in the second electronic device based on the first information.

2. The method according to claim 1, wherein the first interface further comprises a user-defined theme; and the method further comprises:
detecting a selection operation for the user-defined theme, and determining second information of the user-defined theme based on a user operation detected on a setting-related interface of the user-defined theme, wherein the second information indicates an animation parameter value of an animation, and the setting-related interface is used to support a user in setting the animation parameter value of the animation;
determining a theme package of the user-defined theme based on the second information of the user-defined theme; and
sending the theme package of the user-defined theme to the second electronic device, for the second electronic device to update the animation parameter value of the animation in the second electronic device based on the second information.

3. The method according to claim 2, wherein determining the second information of the user-defined theme based on the user operation detected on the setting-related interface of the user-defined theme comprises:
displaying a second interface, wherein the second interface comprises an animation type;
detecting a selection operation for the animation type, and displaying a third interface, wherein the third interface comprises an option of the animation type, the option indicates an animation parameter value of an animation, and animation parameter values that are of a same animation and that are indicated by different options are at least partially different; and
detecting a selection operation for a first option of the animation type, and determining that the second information of the user-defined theme comprises: the animation type is the first option.

4. The method according to claim 2, wherein determining the second information of the user-defined theme based on the user operation detected on the setting-related interface of the user-defined theme comprises:
displaying a fourth interface, wherein the fourth interface comprises a first animation list;
detecting a selection operation for a first animation in the first animation list, and displaying a fifth interface, wherein the fifth interface comprises an option of a first animation parameter of the first animation; and
detecting a selection operation for a second option of the first animation parameter, and determining that the second information of the user-defined theme comprises: the first animation parameter of the first animation is the second option.

5. The method according to claim 4, wherein a running condition of an animation in the first animation list matches the device information of the second electronic device; and/or
a running condition of the option matches the device information of the second electronic device.

6. The method according to claim 1, wherein the method further comprises:
detecting an animation setting request for the second electronic device, and determining animation setting information based on a user operation detected on an animation setting-related interface, wherein the animation setting information indicates an animation parameter value of an animation, and the animation setting-related interface is used to support a user in setting the animation parameter value of the animation; and
sending the animation setting information to the second electronic device, for the second electronic device to update the animation parameter value of the animation in the second electronic device based on the animation setting information.

7. The method according to claim 6, wherein determining the animation setting information based on the user operation detected on the animation setting-related interface comprises:
displaying a sixth interface, wherein the sixth interface comprises an animation type;
detecting a selection operation for the animation type, and displaying a seventh interface, wherein the seventh interface comprises an option of the animation type, the option indicates an animation parameter value of an animation, and animation parameter values that are of an animation and that are indicated by different options are at least partially different; and
detecting a selection operation for a third option of the animation type, and determining that the animation setting information comprises: the animation type is the third option.

8. The method according to claim 3 or 7, wherein a running condition of the option of the animation type matches the device information of the second electronic device.

9. The method according to claim 6, wherein the method further comprises:
displaying an eighth interface, wherein the eighth interface comprises a second animation list;
detecting a selection operation for a second animation in the second animation list, and displaying a ninth interface, wherein the ninth interface comprises an option of a second animation parameter of the second animation; and
detecting a selection operation for a fourth option of the second animation parameter, and determining that the animation setting information comprises: the second animation parameter of the second animation is the fourth option.

10. The method according to claim 9, wherein a running condition of an animation in the second animation list matches the device information of the second electronic device; and/or
a running condition of the option matches the device information of the second electronic device.

11. The method according to any one of claims 1 to 10, wherein displaying the first interface comprises:
sending a first request message to a server, wherein the first request message is used to request a theme corresponding to the second electronic device;
receiving a theme list sent by the server in response to the first request message, wherein the theme list is generated based on a successfully matched theme obtained by the server by sequentially matching the device information of the second electronic device with a running condition of each theme; and
displaying the first interface based on the theme list.

12. The method according to claim 11, wherein the first request message comprises the device information of the second electronic device, and the device information of the second electronic device is obtained by the first electronic device from the second electronic device.

13. The method according to any one of claims 1 to 10, wherein the device information of the second electronic device comprises a device type, a device model, a quantity of CPU cores, and/or a CPU frequency.

14. An animation configuration method, applied to a second electronic device, wherein the method comprises:
receiving a theme package of a first theme sent by a first electronic device, wherein the first electronic device is configured to perform the animation configuration method according to any one of claims 1 to 13, the theme package of the first theme comprises first information, and the first information indicates an animation parameter value of an animation; and
updating an animation parameter value of an animation based on the first information.

15. The method according to claim 14, wherein updating the animation parameter value of the animation based on the first information comprises:
obtaining an application that allows animation user-defining in the second electronic device, and sending the first information to the application, for the application to update an animation parameter value of an animation in the application based on the first information.

16. The method according to claim 14, further comprising:
detecting an animation setting request, and determining animation setting information based on a user operation detected on an animation setting-related interface, wherein the animation setting information indicates an animation parameter value of an animation, and the animation setting-related interface is used to support a user in setting the animation parameter of the animation; and
updating the animation parameter value of the animation based on the animation setting information.

17. The method according to claim 16, wherein determining the animation setting information based on the user operation detected on the animation setting-related interface comprises:
displaying a tenth interface, wherein the tenth interface comprises an animation type;
detecting a selection operation for the animation type, and displaying an eleventh interface, wherein the eleventh interface comprises an option of the animation type, the option indicates an animation parameter value of an animation, and animation parameter values that are of an animation and that are indicated by different options are at least partially different; and
detecting a selection operation for a first option of the animation type, and determining that the animation setting information comprises: the animation type is the first option.

18. The method according to claim 16, wherein the method further comprises:
displaying a twelfth interface, wherein the twelfth interface comprises a third animation list;
detecting a selection operation for a third animation in the third animation list, and displaying a thirteenth interface, wherein the thirteenth interface comprises an option of a third animation parameter of the third animation; and
detecting a selection operation for a fifth option of the third animation parameter, and determining that the animation setting information comprises: the third animation parameter is the fifth option.

19. A first electronic device, comprising:
a processor and a memory, wherein one or more computer programs are stored in the memory, the one or more computer programs comprise instructions, and when the instructions are executed by the processor, the first electronic device is enabled to perform the method according to any one of claims 1 to 13.

20. A second electronic device, comprising:
a processor and a memory, wherein one or more computer programs are stored in the memory, the one or more computer programs comprise instructions, and when the instructions are executed by the processor, the second electronic device is enabled to perform the method according to any one of claims 14 to 18.

21. An animation configuration system, comprising the first electronic device according to claim 19 and the second electronic device according to claim 20.

22. The system according to claim 21, further comprising: a server, configured to send, to the first electronic device, the theme list that is generated based on a successfully matched theme obtained by sequentially matching device information of the second electronic device with a running condition of each theme.

23. A computer-readable storage medium, wherein the computer-readable storage medium stores a computer program, and when the computer program is run on a computer, the computer is enabled to perform the method according to any one of claims 1 to 18.
